# EUROPEAN PATENT APPLICATION

(11) **EP 4 443 287 A1**
(43) Date of publication of application: **09.10.2024**
(21) Application number: 22915096.6
(22) Date of filing: 29.12.2022
(51) Int. Cl.: G06F 3/16

(54) **AUDIO PROCESSING METHOD AND SYSTEM, AND RELATED APPARATUSES**

(30) Priority: 31.12.2021 CN 202111678969
(71) Applicant: Huawei Technologies Co., Ltd., Shenzhen, Guangdong 518129 (CN)
(72) Inventor: LI, Nian, Shenzhen, Guangdong 518129 (CN)
(74) Representative: MERH-IP Matias Erny Reichl Hoffmann Patentanwälte PartG mbB
(86) International application number: PCT/CN2022/143572
(87) International publication number: WO 2023/125847

(57) **Abstract**

This application discloses an audio processing method, a system, and a related apparatus. A first electronic device submits, on a sound effect production web page sent by a cloud server, a sound effect parameter set by a designer to the cloud server, and the cloud server generates a sound effect configuration file based on the sound effect parameter submitted by the first electronic device, and provides the sound effect configuration file for another device to download and use. The second electronic device may download the sound effect configuration file from the cloud server, and play audio based on the sound effect configuration file. In this way, an independent tuning tool does not need to be downloaded on the first electronic device for sound effect production, but the sound effect configuration file is generated on the cloud server. This avoids a problem that an audio player cannot play the sound effect configuration file or the audio player crashes because a version of the tuning tool does not match a version of the audio player on the second electronic device.

## Description

This application claims priority to Chinese Patent Application No. 202111678969.0, filed with the China National Intellectual Property Administration on December 31, 2021 and entitled "AUDIO PROCES SING METHOD, SYSTEM, AND RELATED APPARATUS", which is incorporated herein by reference in its entirety.

### TECHNICAL FIELD

This application relates to the field of audio technologies, and in particular, to an audio processing method, a system, and a related apparatus.

### BACKGROUND

With development of audio processing technologies, users have an increasingly high requirement on a sound effect when an electronic device plays audio data. Currently, the electronic device may adjust a sound effect of to-be-played audio data, to improve a hearing feeling and an auditory effect, and optimize or compensate for defects in hardware (such as a headset and a speaker) or auditory environments (such as a room and a carriage).

Currently, a sound effect designer need to download a tuning tool on a tuning device when producing a sound effect. After the tuning tool is downloaded on the tuning device, the sound effect designer needs to design and debug the sound effect on the tuning tool. After the debugging is complete, the tuning tool on the tuning device can convert a sound effect parameter adjusted by the sound effect designer into a sound effect configuration file for a player to play music, and locally store the file in the tuning device. The sound effect designer can then upload the sound effect configuration file to a sound effect market for users to download. A user may download, by using an electronic device, the sound effect configuration file from the sound effect market to a music player of the electronic device for use.

Because the tuning tool is separated from the music player, if a version of the tuning tool is incompatible with a version of the player, the sound effect configuration file generated by the tuning tool cannot be used on the music player.

### SUMMARY

This application provides an audio processing method, a system, and a related apparatus. An independent tuning tool does not need to be downloaded on a first electronic device for sound effect production, but a sound effect configuration file is generated on a cloud server. This avoids a problem that an audio player cannot play the sound effect configuration file or the audio player crashes because a version of the tuning tool does not match a version of the audio player on a second electronic device.

According to a first aspect, this application provides an audio processing method, applied to an audio processing system that includes a first electronic device and a second electronic device. The method includes: The first electronic device obtains first web page data of a sound effect production web page from a cloud server; the first electronic device displays the sound effect production web page based on the first web page data; the first electronic device receives a first sound effect parameter entered by a user on the sound effect production web page; the first electronic device sends the first sound effect parameter to the cloud server; the second electronic device sends, to the cloud server, a download request for a first sound effect configuration file corresponding to the first sound effect parameter; the second electronic device receives the first sound effect configuration file sent by the cloud server; the second electronic device performs sound effect processing on original audio based on the first sound effect configuration file, to obtain target audio; and the second electronic device plays the target audio.

Therefore, this application provides an audio processing method. The first electronic device submits, on the sound effect production web page sent by the cloud server, a sound effect parameter set by a designer to the cloud server, and the cloud server generates the sound effect configuration file based on the sound effect parameter submitted by the first electronic device, and provides the sound effect configuration file for another device to download and use. The second electronic device may download the sound effect configuration file from the cloud server, and play audio based on the sound effect configuration file.

In this way, (1) an independent tuning tool does not need to be downloaded on the first electronic device for sound effect production, but the sound effect configuration file is generated on the cloud server. This avoids a problem that an audio player cannot play the sound effect configuration file or the audio player crashes because a version of the tuning tool does not match a version of the audio player on the second electronic device. (2) Because the sound effect configuration file is generated on the cloud server, the cloud server may provide function upgrade for a sound effect design at any time, and display the design function to the designer through the sound effect production web page, to facilitate iterative upgrade of the sound effect design function. (3) Because the sound effect configuration file is generated on the cloud server, the sound effect configuration file is not stored on the first electronic device and is not exposed to the user, so that a risk of tampering with the sound effect configuration file is reduced, and confidentiality and security of the sound effect configuration file are increased. (4) Because the cloud server provides the sound effect production web page for the first electronic device, the cloud server can standardize a setting range and setting permission of a sound effect parameter on the sound effect production web page, to facilitate release and management of the sound effect configuration file.

In a possible implementation, that the first electronic device obtains first web page data of a sound effect production web page from a cloud server specifically includes: The first electronic device receives a first input of the user for opening the sound effect production web page; the first electronic device sends, in response to the first input, a first web page request to the cloud server; and the first electronic device receives the first web page data sent by the cloud server. In this way, the user may open the sound effect production web page on the first electronic device to design the sound effect parameter, and does not need to download a dedicated design client, so that a design operation of the user is facilitated.

In a possible implementation, the audio processing system further includes the cloud server. Before the second electronic device sends the download request for the first sound effect configuration file corresponding to the first sound effect parameter to the cloud server, the method further includes: The first electronic device receives a first sound effect description and a third input for confirming release of the first sound effect parameter that are entered by the user; the first electronic device sends, in response to the third input, a release request to the cloud server, where the release request includes an identifier of the first sound effect parameter and the first sound effect description; the cloud server generates, in response to the release request, first sound effect display information based on the first sound effect description; the cloud server sends the first sound effect display information to the second electronic device; and the second electronic device displays the first sound effect display information. In this way, the user may actively trigger the release of the sound effect configuration file of the sound effect parameter to a sound effect market for another user to download.

In a possible implementation, before the first electronic device receives the first sound effect description and confirming release of the first sound effect parameter that are entered by the user, the method further includes: The first electronic device receives a second input of the user for auditioning first music data based on the first sound effect parameter; the first electronic device sends, in response to the second input, an audition request to the cloud server; the cloud server performs, in response to the audition request, sound effect processing on the first music data based on the first sound effect configuration file, to obtain second music data; the cloud server sends the first music data and/or the second music data to the first electronic device; and the first electronic device plays the received first music data and/or the received second music data. In this way, the user can audition the sound effect of the sound effect parameter, and it is convenient for the user to design a sound effect parameter with a better effect.

In a possible implementation, before the second electronic device sends, to the cloud server, the download request for the first sound effect configuration file, the method further includes: The second electronic device receives a fourth input of the user for downloading the first sound effect configuration file. That the second electronic device sends, to the cloud server, a download request for a first sound effect configuration file specifically includes: The second electronic device sends, in response to the fourth input, the download request for the first sound effect configuration file to the cloud server.

In a possible implementation, that the second electronic device receives the first sound effect configuration file sent by the cloud server specifically includes: The second electronic device receives the first sound effect configuration file and a first sound effect algorithm plug-in that are sent by the cloud server. That the second electronic device performs sound effect processing on original audio based on the first sound effect configuration file, to obtain target audio specifically includes: The second electronic device performs sound effect processing on the original audio based on the first sound effect configuration file and the first sound effect algorithm plug-in, to obtain the target audio. In this way, a sound effect algorithm of a playing client on the second electronic device may be updated, to implement more sound effect functions, for example, sound recording noise reduction, human voice and accompaniment separation, and spatial surround processing.

In a possible implementation, the audio processing system further includes the cloud server. The method further includes: When the first electronic device receives the first sound effect parameter entered by the user on the sound effect production web page, the first electronic device receives a first sound effect algorithm identifier entered by the user on the sound effect production web page, where the first sound effect algorithm identifier is an identifier of the first sound effect algorithm plug-in corresponding to the first sound effect parameter; and after the cloud server receives the download request for the first sound effect configuration file, the cloud server obtains, based on the first sound effect algorithm identifier, the first sound effect algorithm plug-in from one or more sound effect algorithm plug-ins stored in a sound effect database.

In a possible implementation, the audio processing system further includes the cloud server. The method further includes: The cloud server obtains, based on the first sound effect parameter, the first sound effect algorithm plug-in corresponding to the first sound effect parameter from the one or more sound effect algorithm plug-ins stored in the sound effect database.

In a possible implementation, the audio processing system further includes the cloud server. After the cloud server generates the first sound effect configuration file based on the first sound effect parameter, the method further includes: The first electronic device receives a fifth input of the user for sharing the first sound effect configuration file to a sound effect topic circle; the first electronic device sends, in response to the fifth input, a sharing request to the cloud server, where the sharing request includes a first topic name and first description content that are entered by the user; the cloud server generates a first topic tweet based on the first topic name, the first description content, and a download link of the first sound effect configuration; the second electronic device receives a sixth input of the user for the first topic name; the second electronic device sends, in response to the sixth input, a first topic request to the cloud server; the cloud server sends, to the second electronic device in response to the first topic request, one or more topic tweets associated with a first topic, where the one or more topic tweets associated with the first topic include the first topic tweet; and the second electronic device displays the first topic tweet. In this way, topicality of the sound effect function when the user listens to music and participation of the user in the sound effect function can be increased, so that the user can discover a hot sound effect in time.

In a possible implementation, the method further includes: The second electronic device receives evaluation information of the user for the first topic tweet; the second electronic device sends the evaluation information of the first topic tweet to the cloud server; the cloud server collects statistics on an evaluation degree of the first sound effect configuration file based on evaluation information that is of the first topic tweet and that is sent by a plurality of devices, where the plurality of devices include the second electronic device; the cloud server determines a recommendation degree of the first sound effect configuration file based on the evaluation degree of the first sound effect configuration file; and the cloud server pushes the first sound effect configuration file to a playing client device based on the recommendation degree of the first sound effect configuration file. In this way, topicality of the sound effect function when the user listens to music and participation of the user in the sound effect function can be increased, so that the user can discover a hot sound effect in time.

According to a second aspect, this application provides another audio processing method, including: A cloud server sends first web page data of a sound effect production web page to a first electronic device, where the first web page data is used by the first electronic device to display the sound effect production web page; the cloud server receives a first sound effect parameter returned by the first electronic device on the sound effect production web page; the cloud server generates a first sound effect configuration file based on the first sound effect parameter; the cloud server receives a download request that is for the first sound effect configuration file and that is sent by the second electronic device; and the cloud server sends, in response to the download request, the first sound effect configuration file to the second electronic device, where the first sound effect configuration file is used by the second electronic device to process original audio sound effect into target audio based on the first sound effect configuration file, and play the target audio.

In a possible implementation, that a cloud server sends first web page data of a sound effect production web page to a first electronic device specifically includes: The cloud server receives a first web page request sent by the first electronic device; and the cloud server sends the first web page data of the sound effect production web page to the first electronic device.

In a possible implementation, before the cloud server receives the download request that is for the first sound effect configuration file and that is sent by the second electronic device, the method further includes: The cloud server receives a release request sent by the first electronic device, where the release request includes an identifier of the first sound effect parameter and the first sound effect description; the cloud server generates, in response to the release request, first sound effect display information based on the first sound effect description; and the cloud server sends the first sound effect display information to the second electronic device.

In a possible implementation, before the cloud server receives the release request sent by the first electronic device, the method further includes: The cloud server receives an audition request sent by the first electronic device; the cloud server performs, in response to the audition request, sound effect processing on first music data based on the first sound effect configuration file, to obtain second music data; the cloud server sends the first music data and/or the second music data to the first electronic device; and the first electronic device plays the received first music data and/or the received second music data.

In a possible implementation, that the cloud server sends, in response to the download request, the first sound effect configuration file to the second electronic device specifically includes: The cloud server sends, in response to the download request the first sound effect configuration file and a first sound effect algorithm plug-in to the second electronic device, where the first sound effect algorithm plug-in and the first sound effect configuration file are jointly used by the second electronic device to perform sound effect processing on the original audio, to obtain the target audio.

In a possible implementation, the first sound effect parameter includes an identifier of the first sound effect algorithm plug-in, and the method further includes: After the cloud server receives the download request for the first sound effect configuration file, the cloud server obtains, based on the first sound effect algorithm identifier, the first sound effect algorithm plug-in from one or more sound effect algorithm plug-ins stored in a sound effect database.

In a possible implementation, the cloud server obtains, based on the first sound effect parameter, the first sound effect algorithm plug-in corresponding to the first sound effect parameter from the one or more sound effect algorithm plug-ins stored in the sound effect database.

In a possible implementation, after the cloud server generates the first sound effect configuration file based on the first sound effect parameter, the method further includes: The cloud server receives a sharing request that is for the first sound effect configuration file and that is sent by the first electronic device, where the sharing request includes a first topic name and first description content that are entered by the user; the cloud server generates a first topic tweet based on the first topic name, the first description content, and a download link of the first sound effect configuration; the cloud server receives a first topic request sent by the second electronic device; and the cloud server sends, to the second electronic device in response to the first topic request, one or more topic tweets associated with a first topic, where the one or more topic tweets associated with the first topic include the first topic tweet.

In a possible implementation, the method further includes: The cloud server receives evaluation information that is of the first topic tweet and that is sent by the second electronic device; the cloud server collects statistics on an evaluation degree of the first sound effect configuration file based on evaluation information that is of the first topic tweet and that is sent by a plurality of devices, where the plurality of devices include the second electronic device; the cloud server determines a recommendation degree of the first sound effect configuration file based on the evaluation degree of the first sound effect configuration file; and the cloud server pushes the first sound effect configuration file to a playing client device based on the recommendation degree of the first sound effect configuration file.

According to a third aspect, this application provides an electronic device, which is a first electronic device and includes one or more processors and one or more memories. The one or more memories are coupled to the one or more processors. The one or more memories are configured to store computer program code, and the computer program code includes computer instructions. When the one or more processors execute the computer instructions, the first electronic device is enabled to perform the audio processing method performed by the first electronic device according to any one of the possible implementations of any one of the foregoing aspects.

According to a fourth aspect, this application provides an electronic device, which is a second electronic device and includes one or more processors and one or more memories. The one or more memories are coupled to the one or more processors. The one or more memories are configured to store computer program code, and the computer program code includes computer instructions. When the one or more processors execute the computer instructions, the second electronic device is enabled to perform the audio processing method performed by the second electronic device according to any one of the possible implementations of any one of the foregoing aspects.

According to a fifth aspect, this application provides a cloud server, including one or more processors and one or more memories. The one or more memories are coupled to the one or more processors. The one or more memories are configured to store computer program code, and the computer program code includes computer instructions. When the one or more processors execute the computer instructions, the cloud server is enabled to perform the audio processing method performed by the cloud server according to any one of the possible implementations of any one of the foregoing aspects.

According to a sixth aspect, this application provides a computer storage medium, including computer instructions. When the computer instructions are run on a first electronic device, the first electronic device is enabled to perform the audio processing method performed by the first electronic device according to any one of the possible implementations of any one of the foregoing aspects.

According to a seventh aspect, this application provides a computer storage medium, including computer instructions. When the computer instructions are run on a second electronic device, the second electronic device is enabled to perform the audio processing method performed by the second electronic device according to any one of the possible implementations of any one of the foregoing aspects.

According to an eighth aspect, this application provides a computer storage medium, including computer instructions. When the computer instructions are run on a cloud server, the cloud server is enabled to perform the audio processing method performed by the cloud server according to any one of the possible implementations of any one of the foregoing aspects.

According to a ninth aspect, this application provides a computer program product. When the computer program product runs on a computer, the computer is enabled to perform the audio processing method performed by the first electronic device according to any one of the possible implementations of any one of the foregoing aspects.

According to a tenth aspect, this application provides a computer program product. When the computer program product runs on a computer, the computer is enabled to perform the audio processing method performed by the second electronic device according to any one of the possible implementations of any one of the foregoing aspects.

According to an eleventh aspect, this application provides a computer program product. When the computer program product runs on a computer, the computer is enabled to perform the audio processing method performed by the cloud server according to any one of the possible implementations of any one of the foregoing aspects.

According to a twelfth aspect, this application provides an audio processing system, including a first electronic device, a second electronic device, and a cloud server. The first electronic device is the first electronic device according to any one of the possible implementations of any one of the foregoing aspects, the second electronic device is the second electronic device according to any one of the possible implementations of any one of the foregoing aspects, and the cloud server is the cloud server according to any one of the possible implementations of any one of the foregoing aspects.

For beneficial effects of the second aspect to the twelfth aspect, refer to the beneficial effects of the first aspect. Details are not described again.

### BRIEF DESCRIPTION OF DRAWINGS

FIG. 1 is a schematic diagram of a sound effect setting process according to an embodiment of this application;
FIG. 2A is a schematic diagram of an architecture of an audio processing system according to an embodiment of this application;
FIG. 2B is an interaction diagram of an audio processing system according to an embodiment of this application;
FIG. 3 is a schematic diagram of a hardware structure of an electronic device according to an embodiment of this application;
FIG. 4 is a schematic diagram of a hardware structure of another electronic device according to an embodiment of this application;
FIG. 5 is a schematic diagram of a hardware structure of a cloud server according to an embodiment of this application;
FIG. 6A to FIG. 6L are schematic diagrams of a group of interfaces for producing a sound effect according to an embodiment of this application;
FIG. 7A to FIG. 7E are schematic diagrams of a group of interfaces for downloading and using a sound effect according to an embodiment of this application;
FIG. 8 is a schematic flowchart of an audio processing method according to an embodiment of this application;
FIG. 9A to FIG. 9C are schematic diagrams of a group of interfaces for sharing a topic tweet of a sound effect to a sound effect topic circle according to an embodiment of this application;
FIG. 9D to FIG. 9F are schematic diagrams of a group of interfaces for viewing a sound effect topic circle according to an embodiment of this application;
FIG. 10 is a schematic flowchart of an audio processing method according to another embodiment of this application; and
FIG. 11 is a schematic flowchart of an audio processing method according to another embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The following describes a sound effect setting process according to embodiments of this application.

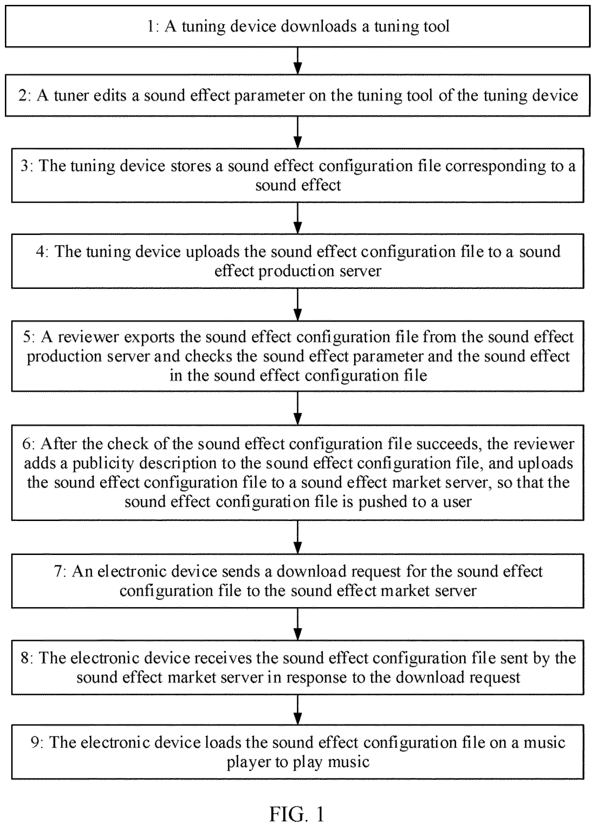

FIG. 1 is a schematic diagram of a sound effect setting process according to an embodiment of this application.

As shown in FIG. 1, the sound effect setting process may include the following steps.
1: A tuning device downloads a tuning tool.
2: A tuner edits a sound effect parameter on the tuning tool of the tuning device.
3: The tuning device stores a sound effect configuration file corresponding to a sound effect.
4: The tuning device uploads the sound effect configuration file to a sound effect production server.
5: A reviewer exports the sound effect configuration file from the sound effect production server and checks the sound effect parameter and the sound effect in the sound effect configuration file.
6: After the check of the sound effect configuration file succeeds, the reviewer adds a publicity description to the sound effect configuration file, and uploads the sound effect configuration file to a sound effect market server, so that the sound effect configuration file can be pushed to an electronic device of a user.
7: The electronic device sends a download request for the sound effect configuration file to the sound effect market server.
8: The electronic device receives the sound effect configuration file sent by the sound effect market server in response to the download request.
9: The electronic device loads the sound effect configuration file on a music player to play music.

It can be seen from the foregoing sound effect setting process that: (1) Because the tuning tool on the tuning device and the music player on the electronic device are respectively on two devices, if the sound effect configuration file generated by the tuning tool is to be identified and used by the music player on the electronic device, a version of the music player needs to be compatible with a version of the tuning tool. However, the tuning tool is offline when making a sound effect, and it is generally difficult to upgrade the tuning tool. Therefore, the version of the tuning tool is much earlier than the version of the player. Once the version of the tuning tool does not match the version of the music player, the music player cannot use the sound effect configuration file generated by the tuning tool, or even the music player stops responding. (2) Because the tuning tool on the tuning device is an offline tool, and the generated sound effect configuration file is stored on the tuning device and exposed to the user, the sound effect configuration file is easy to be maliciously tampered with. As a result, a functional error occurs when the sound effect configuration file is downloaded to the music player of the electronic device. In addition, when the sound effect configuration file is exposed to the user, it is easy for another user to analyze, through reverse engineering, a business secret such as a sound effect algorithm used by a manufacturer. (3) The sound effect configuration file generated by the tuner on the tuning device needs to be uploaded and then tested and released by the manufacturer's technician with professional audio skills, to ensure that the sound effect parameter in the sound effect configuration file is correct and the sound effect meets the expectation. A large amount of manpower andand operating costs are spent.

Therefore, embodiments of this application provide an audio processing method. A first electronic device submits, on a sound effect production web page sent by a cloud server, a sound effect parameter set by a designer to the cloud server, and the cloud server generates a sound effect configuration file based on the sound effect parameter submitted by the first electronic device, and provides the sound effect configuration file for another device to download and use. A second electronic device may download the sound effect configuration file from the cloud server, and play audio based on the sound effect configuration file.

In this way, (1) an independent tuning tool does not need to be downloaded on the first electronic device for sound effect production, but the sound effect configuration file is generated on the cloud server. This avoids a problem that an audio player cannot play the sound effect configuration file or the audio player crashes because a version of the tuning tool does not match a version of the audio player on the second electronic device. (2) Because the sound effect configuration file is generated on the cloud server, the cloud server may provide function upgrade for the sound effect designer at any time, and display the design function to the designer through the sound effect production web page, to facilitate iterative upgrade of the sound effect design function. (3) Because the sound effect configuration file is generated on the cloud server, the sound effect configuration file is not stored on the first electronic device and is not exposed to the user, so that a risk of tampering with the sound effect configuration file is reduced, and confidentiality and security of the sound effect configuration file are increased. (4) Because the cloud server provides the sound effect production web page for the first electronic device, the cloud server can standardize a setting range and setting permission of a sound effect parameter on the sound effect production web page, to facilitate release and management of the sound effect configuration file.

In embodiments of this application, the first electronic device may be an electronic device 200, and the second electronic device may be an electronic device 100.

The following describes an audio processing system 10 in embodiments of this application.

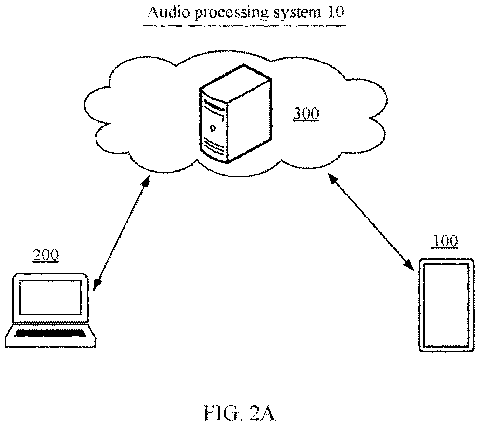

FIG. 2A is a schematic diagram of an architecture of an audio processing system 10 according to an embodiment of this application.

As shown in FIG. 2A, the audio processing system 10 may include an electronic device 100, an electronic device 200, and a cloud server 300. The electronic device 100 may be connected to the cloud server 200 through a 2G network, a 3G network, a 4G network, a 5G network, a wireless local area network (wireless local area network, WLAN), or the like. The electronic device 200 may be connected to the cloud server 300 in a communication manner such as a wireless connection, such as a 2G network, a 3G network, a 4G network, a 5G network, a wireless local area network (wireless local area network, WLAN), or a wired Ethernet connection.

The electronic device 200 may communicate with the cloud server 300 based on a browser/server (browser/server, B/S) architecture. The electronic device 200 may request web page data of a sound effect production web page from the cloud server 300, and display the sound effect production web page. The electronic device 200 may receive a sound effect parameter entered by a sound effect designer on the sound effect production web page, and return the sound effect parameter to the cloud server 300 based on a communication mechanism of the B/S architecture. The electronic device 200 may be a device such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/a virtual reality (virtual reality, VR) device. A specific type of the electronic device 200 is not specifically limited in embodiments of this application.

The cloud server 300 may send, to the electronic device 200 in response to the request of the electronic device 200, the web page data of the sound effect production web page. The cloud server 300 may further generate a sound effect configuration file based on the sound effect parameter sent by the electronic device 200, and push the sound effect configuration file to a plurality of electronic devices 100. The cloud server 300 may distinguish the electronic devices through an account (for example, a Huawei music account) logged in by a user on an electronic device. In some embodiments, the cloud server 300 may include a plurality of servers/databases, and the plurality of servers may separately perform some functions of the cloud server 300. For example, the cloud server 300 may include a web page server, a background server, a sound effect database, and a sound effect market server.

The electronic device 100 may communicate with the cloud server 300 based on a browser/server (browser/server, B/S) architecture, or may communicate with the cloud server 300 based on a client/server (client/server, C/S) architecture. The electronic device 100 may request the sound effect configuration file from the cloud server 300, load the sound effect configuration file on an audio player, and play audio. The electronic device 100 may be a device such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/a virtual reality (virtual reality, VR) device. A specific type of the electronic device 100 is not specifically limited in embodiments of this application.

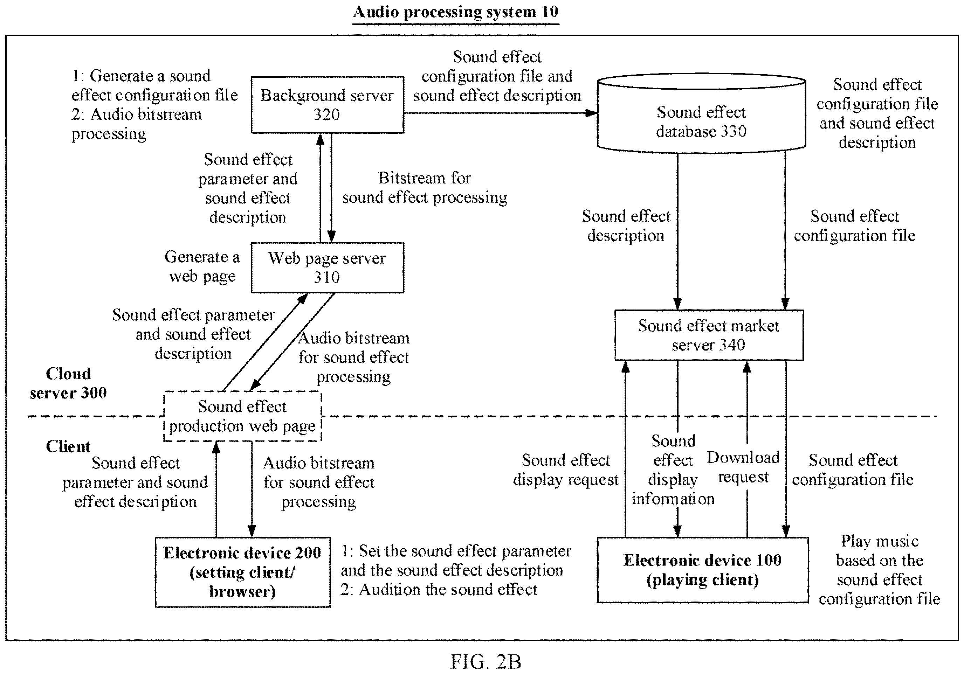

FIG. 2B is an example of an interaction diagram of an audio processing system 10 according to an embodiment of this application.

As shown in FIG. 2B, a cloud server 300 in the audio processing system 10 may include a web page server 310, a background server 320, a sound effect database 330, and a sound effect market server 340.

A client in the audio processing system 10 may include a setting client/browser on an electronic device 200 and a playing client on an electronic device 100.

Specifically, the electronic device 200 may access, based on the setting client (for example, a music application)/browser, a sound effect production web page generated by the web page server 310. The electronic device 200 may receive a sound effect parameter and sound effect description that are set by a sound effect designer on the sound effect production web page, and submit the set sound effect parameter to the web page server 310.

The web page server 310 may send, to the background server 320, the sound effect parameter submitted by the electronic device 200. The background server 320 may generate a sound effect configuration file based on the sound effect parameter. The background server 320 may further generate, based on the sound effect parameter, an audio code stream to which sound effect processing is performed and that is to be auditioned by the sound effect designer.

The background server 320 may send the audio stream to which the sound effect processing is performed to the web page server 310. The web page server 310 may send the sound effect stream to the electronic device 200 through the sound effect production web page. The electronic device 200 may play the audio stream on which sound effect processing is performed.

The background server 320 may further send the generated sound effect configuration file and the sound effect description to the sound effect database 330.

After the sound effect market server 340 receives a sound effect display request sent by the electronic device 100 by using the playing client, the sound effect market server 340 may obtain, from the sound effect database 330, the sound effect description of the sound effect configuration file requested to be presented by the sound effect display request. The sound effect market server 340 may generate sound effect display information based on the sound effect description of the sound effect configuration file, and send the sound effect display information to the electronic device 100.

The sound effect market server 340 may generate a sound effect display web page including the sound effect display information, and send the sound effect display web page to the electronic device 100. Optionally, the sound effect market server 340 may send the sound effect display information to the electronic device 100. After receiving the sound effect display information, the electronic device 100 may generate, in the playing client based on the sound effect display information, a sound effect display page that includes the sound effect display information, and the electronic device 100 may display the sound effect display page.

The electronic device 100 may send a download request to the sound effect market server 340 by using the playing client. The sound effect market server 340 may obtain, in response to the download request, the sound effect configuration file from the sound effect database 330, and send the sound effect configuration file to the electronic device 100.

After receiving the sound effect configuration file, the electronic device 100 may play music based on the sound effect configuration file.

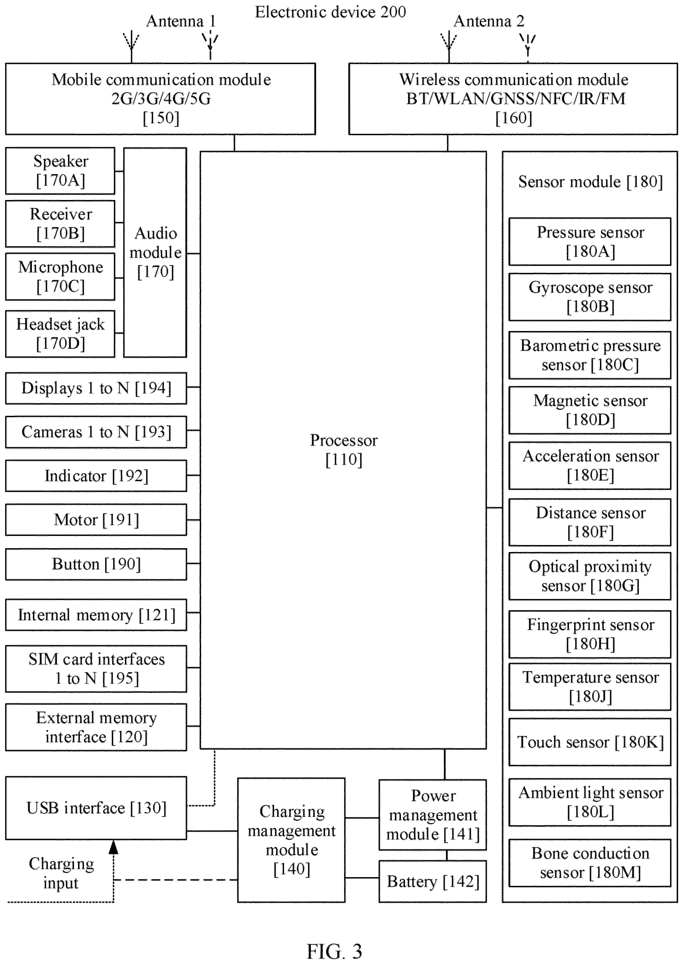

FIG. 3 is a schematic diagram of a structure of an electronic device 100.

The electronic device 100 is used as an example below to describe embodiments in detail. It should be understood that the electronic device 100 shown in FIG. 3 is merely an example, and the electronic device 100 may have more or fewer components than those shown in FIG. 3, or may combine two or more components, or may have different component configurations. Various parts shown in FIG. 3 may be implemented in hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-inter-integrated circuit sound (inter-inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured for control signals or data signals. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and transmits a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD). The display panel may be manufactured by using an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like production department. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data and an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or transmitting a voice message, a user may make a sound near the microphone 170C through a mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is executed.

The gyroscope sensor 180B may be configured to determine a moving posture of the electronic device 100. In some embodiments, angular velocities of the electronic device 100 around three axes (namely, axes x, y, and z) may be determined through the gyroscope sensor 180B. The gyroscope sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario or a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations of the electronic device 100 in various directions (usually on three axes). A magnitude and a direction of gravity may be detected when the electronic device 100 is still. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is lower than another threshold, the electronic device 100 heats the battery 142, to avoid abnormal shutdown of the electronic device 100 caused by a low temperature. In some other embodiments, when the temperature is lower than still another threshold, the electronic device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user settings and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external memory card. The electronic device 100 interacts with a network by using the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

The following describes a hardware structure of the electronic device 200 provided in embodiments of this application.

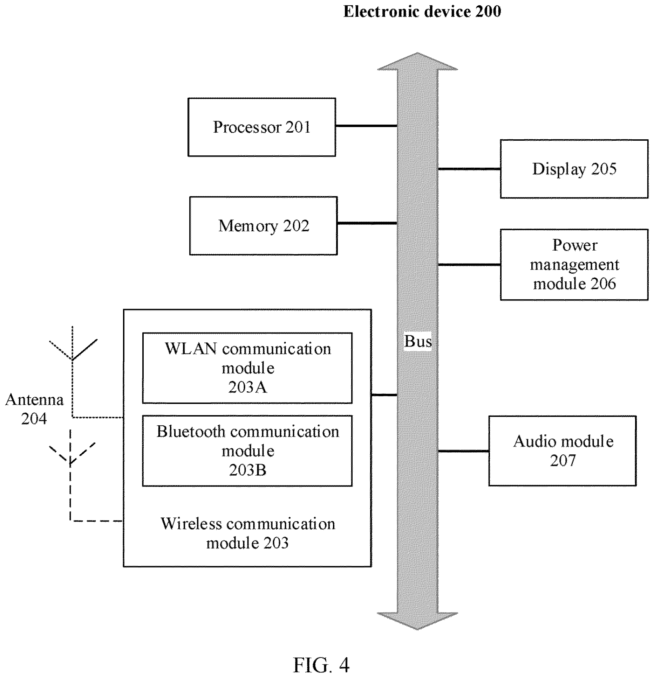

FIG. 4 is a schematic diagram of a hardware structure of an electronic device 200 according to an embodiment of this application.

As shown in FIG. 4, the electronic device 200 may include a processor 201, a memory 202, a wireless communication module 203, an antenna 204, a display 205, a power management module 206, and an audio module 207. Optionally, the electronic device 200 may further include a wired communication module (not shown in FIG. 4). Specifically, the processor 201 may be configured to read and perform a computer readable instruction. During specific implementation, the processor 201 may mainly include a controller, an arithmetic unit, and a register. The controller is mainly responsible for instruction decoding, and sends a control signal for an operation corresponding to the instruction. The arithmetic unit is mainly responsible for saving a quantity of register operations, intermediate operation results, and the like that are temporarily stored during instruction execution. During specific implementation, a hardware architecture of the processor 201 may be an application-specific integrated circuit (ASIC) architecture, an MIPS architecture, an ARM architecture, an NP architecture, or the like.

In some embodiments, the processor 201 may be further configured to generate a signal sent outward by the wireless communication module 203, for example, a Bluetooth broadcast signal or a beacon signal.

The memory 202 is coupled to the processor 201, and is configured to store various software programs and/or a plurality of groups of instructions. During specific implementation, the memory 202 may include a high-speed random access memory, and may also include a nonvolatile memory like one or more disk storage devices, a flash device, or another nonvolatile solid-state storage device. The memory 202 may store an operating system, for example, an embedded operating system such as uCOS, VxWorks, or RTLinux. The memory 202 may further store a communication program, and the communication program may be used to communicate with the electronic device 100 or another device.

The wireless communication module 203 may include one or more of a WLAN communication module 203A and a Bluetooth communication module 203B. Possibly, the Bluetooth communication module 203B may be integrated with another communication module (for example, the WLAN communication module 203A).

In some embodiments, one or more of the WLAN communication module 203A and the Bluetooth communication module 203B may listen to a signal transmitted by another device, for example, a measurement signal or a scanning signal, and may send a response signal, for example, measurement response or scanning response, so that the another device can discover the electronic device 200. The electronic device 200 may establish a wireless communication connection to the another device through one or more of Bluetooth, WLAN, or another near-field communication technology, to perform data transmission.

In some other embodiments, the WLAN communication module 203A may transmit a signal, for example, a broadcast sounding signal or a beacon signal, so that a router can discover the electronic device 200. The electronic device 200 may establish a wireless communication connection to the router through WLAN, and then connect to the cloud server 300.

The wired communication module (not shown in FIG. 4) may be configured to establish a connection to a device such as a router through a network cable, and connect to the cloud server 300 through the router.

The antenna 204 may be configured to transmit and receive an electromagnetic wave signal. Antennas of different communication modules may be multiplexed, or may be independent of each other, to improve antenna utilization. For example, an antenna of the Bluetooth communication module 203B may be multiplexed as an antenna of the WLAN communication module 203A.

The display 205 may be configured to display an image, a video, and the like. The display 205 includes a display panel. The display panel may be a liquid crystal display screen, an organic light-emitting diode, an active-matrix organic light-emitting diode or an active-matrix organic light-emitting diode, a flexible light-emitting diode, a quantum dot light-emitting diode, and the like. In some embodiments, the electronic device 200 may include one or N displays 205, where N is a positive integer greater than 1.

In some embodiments, the electronic device 200 may further include a touch sensor. The touch sensor may be disposed on the display 205, and the touch sensor and the display 205 form a touchscreen that is also referred to as a "touch screen". The touch sensor may be configured to detect a touch operation performed on or near the touch sensor. The touch operation refers to an operation of touching the display 205 by a hand, an elbow, or a stylus of a user. The touch sensor may transfer the detected touch operation to the processor 201, to determine a touch event type. A visual output related to the touch operation may be provided through the display 205. In some other embodiments, the touch sensor may alternatively be disposed on a surface of the electronic device 200 at a location different from that of the display 205.

The power management module 206 may be configured to control a power supply to supply power to the electronic device 200.

The audio module 207 may be configured to output an audio signal through an audio output interface, so that the electronic device 200 can support audio playing. The audio module 207 may be further configured to receive audio data through an audio input interface. The audio module 207 may further load a sound effect configuration file downloaded by the electronic device 200 from the cloud server 300, and play the audio data.

It should be understood that the electronic device 200 shown in FIG. 4 is merely an example, and the electronic device 200 may have more or fewer components than those shown in FIG. 4, or may combine two or more components, or may have different component configurations.

The following describes a hardware structure of a cloud server 300 according to an embodiment of this application.

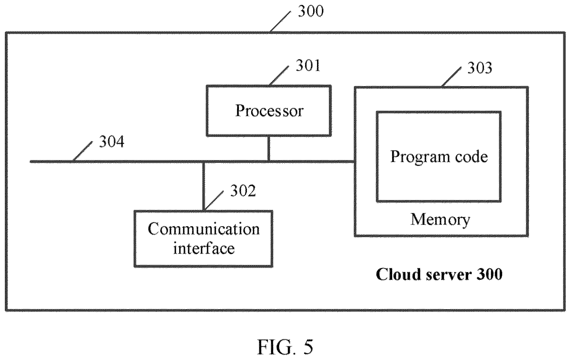

FIG. 5 is a schematic diagram of the hardware structure of the cloud server 300 according to an embodiment of this application.

As shown in FIG. 5, the cloud server 300 includes one or more processors 301, a communication interface 302, and a memory 303. The processor 301, the communication interface 302, and the memory 303 may be connected through a bus or in another manner. In embodiments of this application, the connection through a bus 304 is used as an example. Specifically, the processor 301 may include one or more general-purpose processors, for example, CPUs. The processor 301 may be configured to run program code related to a device running control method.

The communication interface 302 may be a wired interface (for example, an Ethernet interface) or a wireless interface (for example, a cellular network interface or a wireless local area network interface), and is configured to communicate with another node. In embodiments of this application, the communication interface 302 may be specifically configured to communicate with the electronic device 100 and the electronic device 200.

The memory 303 may include a volatile memory (volatile memory), for example, a RAM. The memory may further include a non-volatile memory (non-volatile memory), for example, a ROM, a flash memory (flash memory), an HDD, or a solid-state drive (SSD). Alternatively, the memory 303 may include a combination of the foregoing types of memories. The memory 303 may be configured to store a group of program code, so that the processor 301 invokes the program code stored in the memory 303 to implement the method implemented by the server in embodiments of this application. In embodiments of this application, the memory 303 may alternatively be a storage array, or the like.

In some embodiments, the cloud server 300 may include a plurality of servers, for example, a web page server, a background server, and a download server. For hardware structures of the plurality of servers, refer to the hardware structure of the cloud server 300 shown in FIG. 5.

It should be noted that the cloud server 300 shown in FIG. 5 is merely an implementation of embodiments of this application. In actual application, the cloud server 300 may further include more or fewer components. This is not limited herein.

### The following describes a sound effect production process in embodiments of this application with reference to an application scenario.

In some application scenarios, the electronic device 200 may request, from the cloud server 300, web page data of a sound effect production web page. After the web page data of the sound effect production web page is requested, the electronic device 200 may display the sound effect production web page. The electronic device 200 may receive a sound effect parameter entered by a user on the sound effect production web page, and the electronic device 200 may directly return the sound effect parameter to the cloud server 300. In this way, an independent tuning tool does not need to be downloaded on the electronic device 200 for sound effect production, but the sound effect configuration file is generated on the cloud server. This avoids a problem that an audio player cannot play the sound effect configuration file or the audio player crashes because a version of the tuning tool does not match a version of the audio player on the electronic device 100.

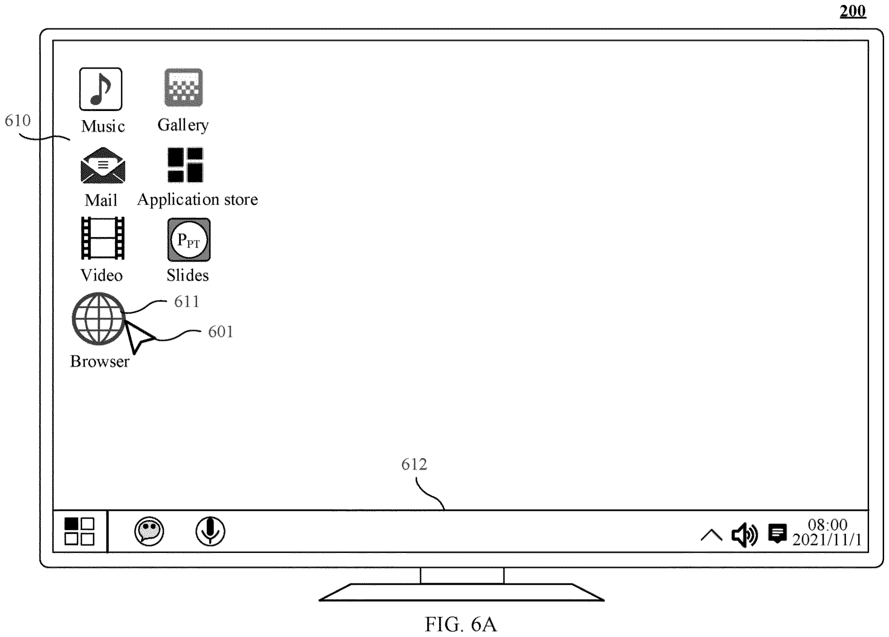

### FIG. 6A to FIG. 6L are schematic diagrams of interfaces for producing a sound effect on an electronic device 200 according to an embodiment of this application.

As shown in FIG. 6A, the electronic device 200 may display a desktop 610, and the desktop 610 may display one or more application icons (such as a music application icon, a gallery application icon, a mail application icon, an application store application icon, a video application icon, a slide application icon, and a browser application icon 611). A taskbar 612 is further included on a bottom of the desktop 610. The taskbar 612 may include a start menu, one or more application icons (such as a chat application icon and a speech recognition application icon), and one or more setting icons (such as a sound setting icon, an input method setting icon, and a time setting icon). When an application interface is switched, the taskbar 612 may remain displayed at the bottom of a display area on the electronic device 200, and is displayed at an upper layer of the application interface.

The electronic device 200 may further display a pointer 601. The pointer 601 indicates a current to-be-operated location of a mouse on an interface displayed by the electronic device 200. The mouse may be disposed on the electronic device 200, or may be an external device of the electronic device 200. The user may control, by using the mouse, operations such as moving, left button single-clicking, left button double-clicking, right button single-clicking, left button pressing and dragging of the pointer 601 on the user interface displayed on the electronic device 200.

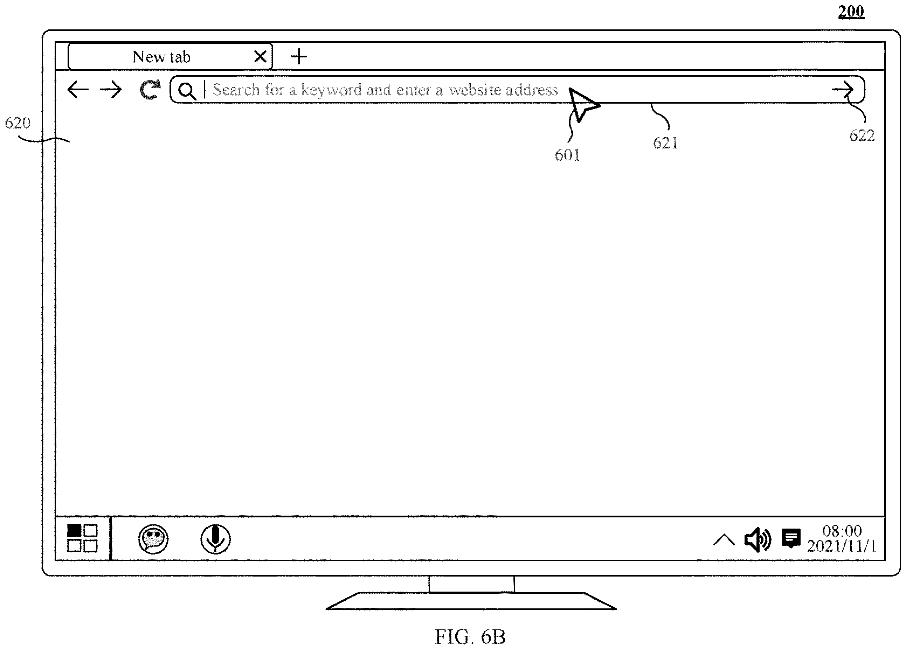

The electronic device 200 may receive a user input (for example, left button single-clicking) for the browser application 611. In response to the input, the electronic device 200 may display a browser interface 620 shown in FIG. 6B. As shown in FIG. 6B, the browser interface 620 may include a website address search box 621 and a website address access control 622.

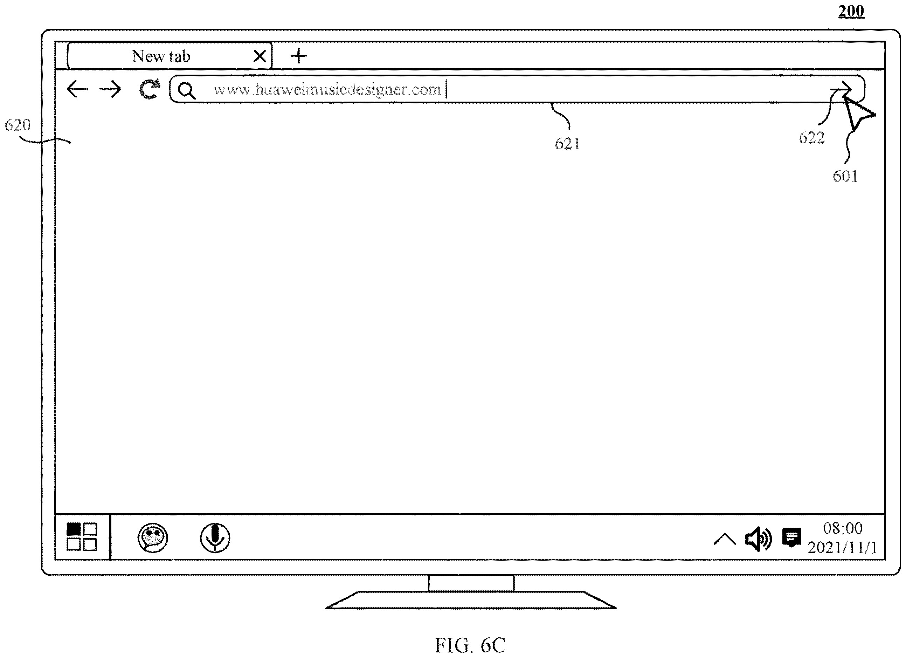

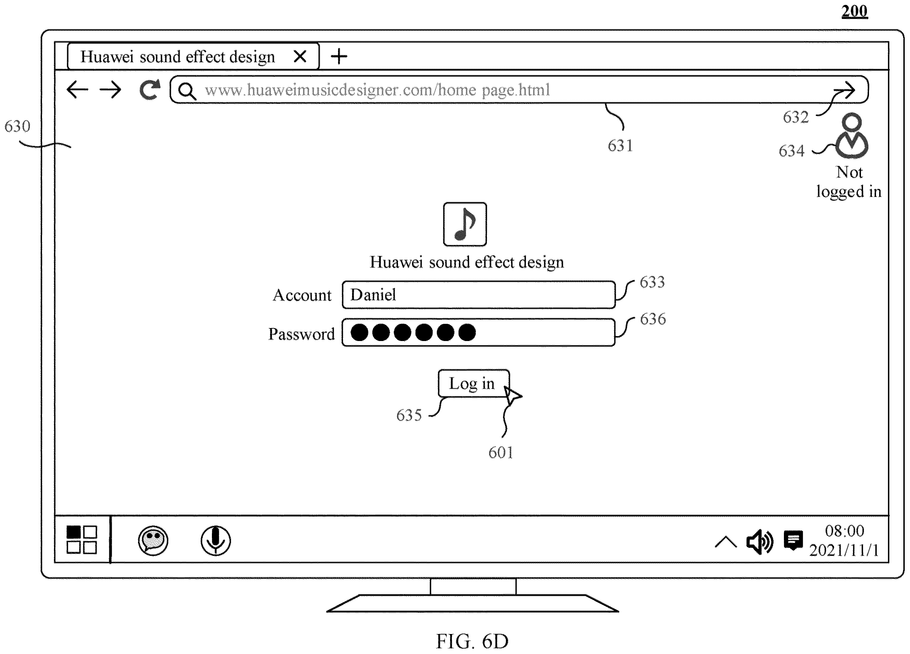

As shown in FIG. 6C, the electronic device 200 may receive a website address (for example, "www.huaweimusicdesigner.com") that is of a sound effect production web page and that is entered by the user in the website address search box 621. The user may enter a website address in the website address search box 621 by using a keyboard. The keyboard may be a virtual keyboard on the electronic device 200 or a physical keyboard, or may be an external device connected to the electronic device 200. After receiving the website address that is of the sound effect production web page and that is entered by the user in the website address search box 621, the electronic device 200 may receive an input (for example, left button single-clicking) of the user for the website address access control 622. In response to the input for the website address access control 622, the electronic device 200 may display a login interface 630 of the sound effect production web page shown in FIG. 6D.

As shown in FIG. 6D, the login interface 630 of a sound effect design website may include a website address search box 631, a website address access control 632, an account input box 633, a password input box 636, an account setting control 634, and a login control 635. The website address search box 631 may display the website address of the login interface 630. The website address of the login interface 630 may be "www.huaweimusicdesigner.com/home page.html". The account setting control 634 may be used to trigger display of a setting option of an account, and a login status and a login account name may be displayed below the account setting control 634. As shown in FIG. 6D, currently, no account is logged in. A prompt such as "not logged in" is displayed below the account setting control 634, to indicate the user that no account is logged in to the sound effect design website. The account setting control 634 may remain displayed when a web page in the sound effect design website is switched.

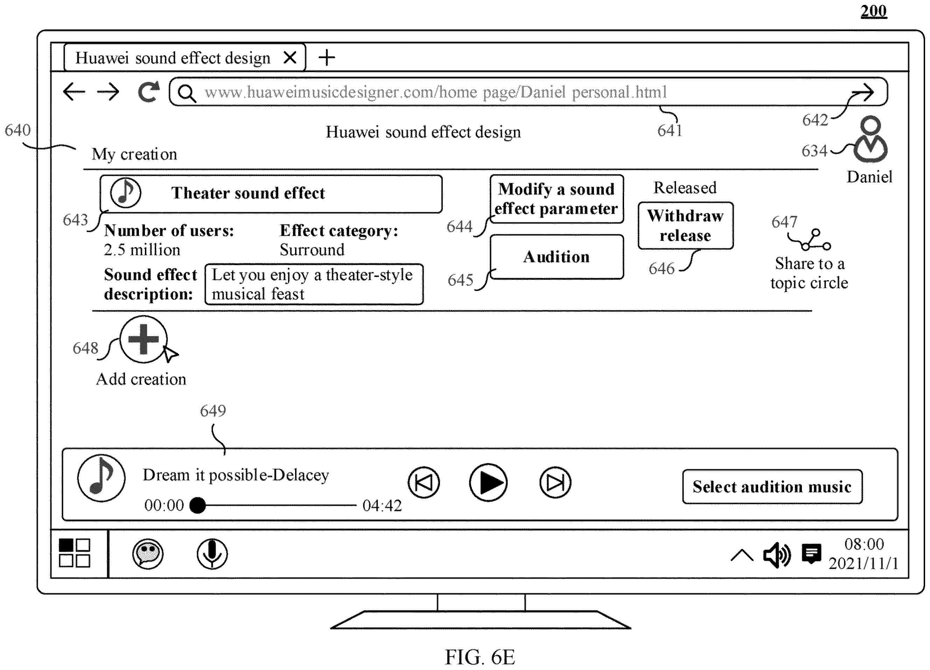

The electronic device 200 may receive the account name entered by the user in the account input box 633 and the password entered in the password input box 636. After the user enters the account name and the password, the electronic device 200 may receive an input (for example, left button single-clicking) of the user for the login control 635. In response to the input for the login control 635, the electronic device 200 may display a personal sound effect home page 640 shown in FIG. 6E.

Optionally, the electronic device 200 may directly anonymously access the personal sound effect home page 640 without using a login account, and submit a sound effect parameter to the cloud server 300.

As shown in FIG. 6E, the personal sound effect home page 640 may include a website address search box 641, a website address access control 642, an account setting control 634, related information or function controls of one or more created sound effects, a sound effect creation adding control 648, and a music playing control bar 649. The one or more created sound effects include a theater sound effect. Related information of the theater sound effect includes a name 643 of the theater sound effect, a number of users (for example, 2.5 million), an effect category (for example, surround), a sound effect description, (for example, a text description like "let you enjoy a theater-style musical feast"), and the like. Function controls of the theater sound effect include a sound effect parameter modification control 644, a sound effect audition control 645, a release withdrawal control 646, and a topic circle sharing control 647. The sound effect parameter control 644 may be used to trigger the electronic device 200 to modify the sound effect parameter of the theater sound effect. The sound effect audition control 645 may be used to trigger the electronic device 200 to play audio based on a sound effect configuration file of the theater sound effect. The release withdrawal control 646 may be used to trigger the electronic device 200 to cancel that the cloud server 300 pushes the theater sound effect to a plurality of electronic devices 100. The topic circle sharing control 647 may be used to trigger the electronic device 200 to share, by using a topic server, the theater sound effect to another user equipment that follows a specified topic. The music playing control bar 649 may be used to control the electronic device 200 to play the audio. The music playing control bar 649 may include an audio name, a playing progress bar, a previous song control, a next song control, a playing control, an audition music selection control, and the like. The audition song selection control may be used to trigger the electronic device 200 to select, from a music library of the cloud server 300, music to be auditioned.

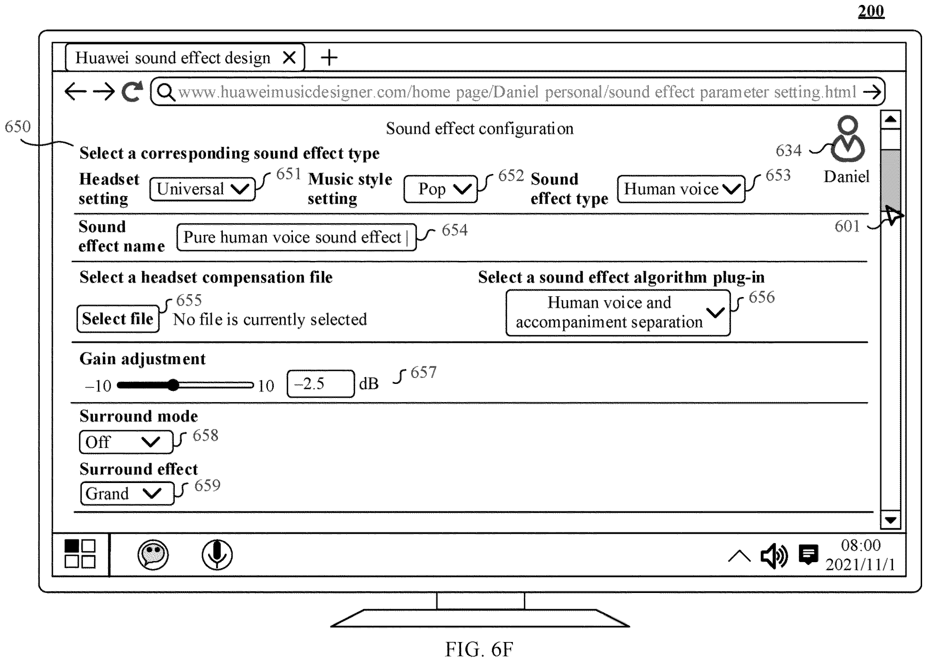

The electronic device 200 may receive an input (for example, left button single-clicking) of the user for the creation adding control 648. In response to the input, the electronic device 200 may display a part 650 of the sound effect production web page shown in FIG. 6F. The sound effect production web page may be used by the user to set the sound effect parameter and the sound effect description. The sound effect parameter may include one or more of the following: a gain adjustment parameter, a surround mode setting parameter, a surround effect setting parameter, a surround reverb setting parameter, a 3D special effect setting parameter, a frequency response setting parameter, a headset compensation setting parameter, a limiter setting parameter, a bass setting parameter, a dynamic compression setting parameter, and the like. The sound effect description may include one or more of the following: a sound effect name, a headset application type, a music style type, a sound effect type, a sound effect description, and the like. Optionally, the sound effect production web page may further set a headset compensation file and/or a sound effect algorithm plug-in that are used together with the sound effect parameter.

As shown in FIG. 6F, the part 650 of the sound effect production web page may include a headset setting bar 651, a music style setting bar 652, a sound effect type setting bar 653, a sound effect name setting bar 654, a headset compensation file setting bar 655, a sound effect algorithm plug-in setting bar 656, a gain adjustment setting bar 657, a surround mode setting bar 658, and a surround effect setting bar 659. A headset applicable model in the headset setting bar 651 may be set to "universal". A music style type in the music style setting bar 652 may be set to "pop". A sound effect type in the sound effect setting bar 653 may be set to "human voice". A sound effect name in the sound effect name setting bar 654 may be set to "pure human voice sound effect". No headset compensation file may be added to the headset compensation file setting field 655. No sound effect algorithm plug-in may be added to the sound effect algorithm plug-in setting bar 656. A gain value in the gain adjustment setting bar 657 may be set to "-2.5 dB". A surround mode in the surround mode setting bar 658 may be set to "off". A surround effect in the surround effect setting bar 659 may be set to "grand".

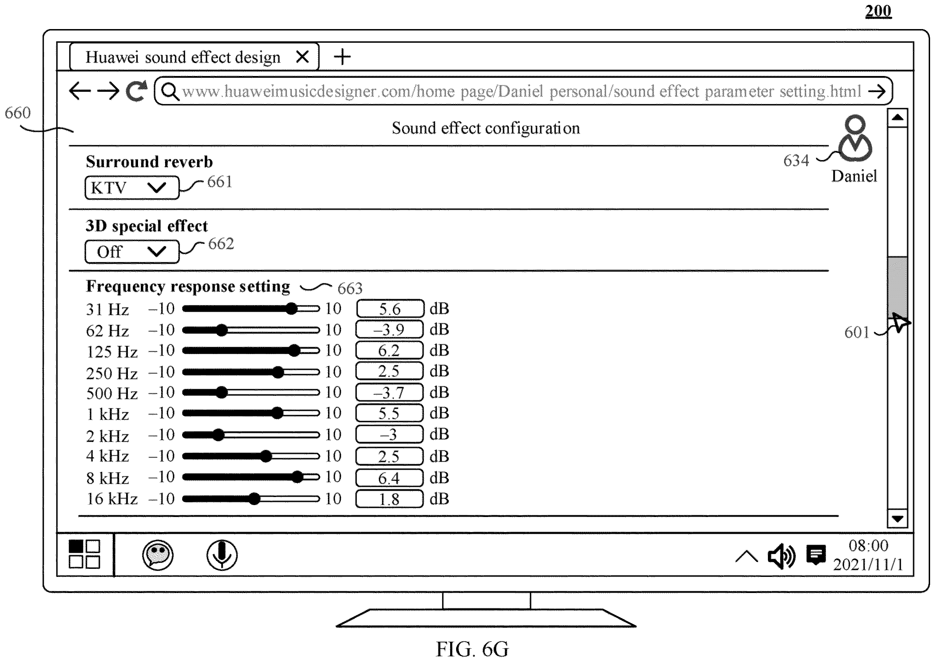

The electronic device 200 may receive an input of the user for sliding the sound effect production web page (for example, controlling the pointer 601 to drag a slider bar on the sound effect production web page to slide down). In response to the input, the electronic device 200 may display a part 660 of the sound effect production web page shown in FIG. 6G, and continue to set the sound effect parameter.

As shown in FIG. 6G, the part 660 of the sound effect production web page may include a surround reverb setting bar 661, a 3D special effect setting bar 662, and a frequency response setting bar 663. A surround reverb type in the surround reverb setting bar 661 may be set to "KTV". A 3D special effect in the 3D special effect setting bar 662 may be set to "off". A frequency response parameter in the frequency response setting bar 663 may be set as "a gain value of a 31 Hz frequency band is 5.6 dB, a gain value of a 62 Hz frequency band is -3.9 dB, a gain value of a 125 Hz frequency band is 6.2 dB, a gain value of a 250 Hz frequency band is 2.5 dB, a gain value of a 500 Hz frequency band is -3.7 dB, a gain value of a 1 kHz frequency band is 5.5 dB, a gain value of a 2 kHz frequency band is -3 dB, a gain value of a 4 kHz frequency band is 2.5 dB, a gain value of an 8 Hz frequency band is 6.4 dB, and a gain value of a 16 Hz frequency band is 1.8 dB".

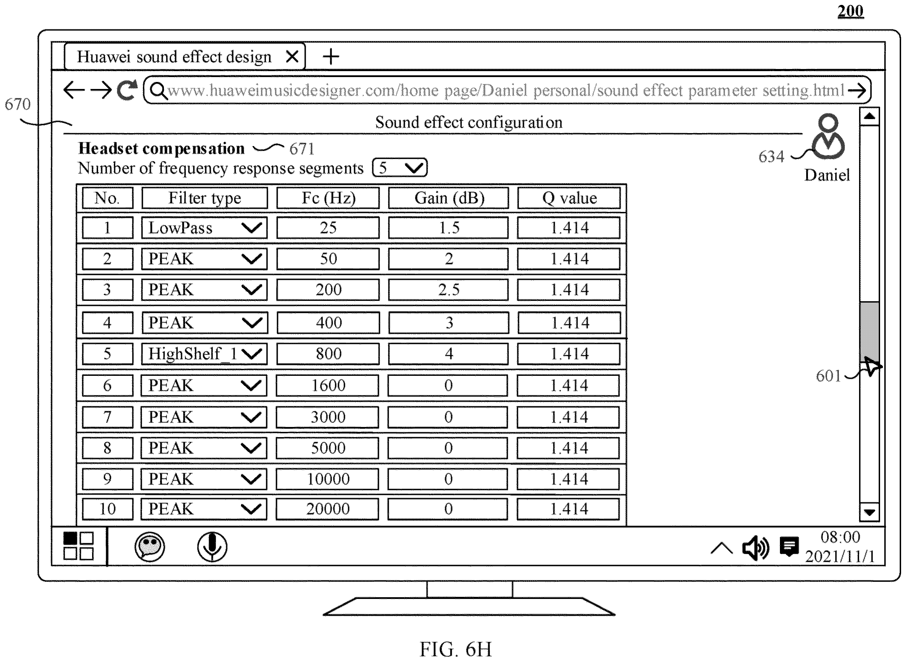

The electronic device 200 may receive an input of the user for sliding the sound effect production web page (for example, controlling the pointer 601 to drag a slider bar on the sound effect production web page to slide down). In response to the input, the electronic device 200 may display a part 670 of the sound effect production web page shown in FIG. 6H, and continue to set the sound effect parameter.

As shown in FIG. 6H, the part 670 of the sound effect production web page may include a headset compensation parameter setting bar 671. Headset compensation in the headset compensation parameter setting bar 671 may use five segments of frequency responses. A first segment of frequency response may be in a 25 Hz frequency band, a filter type may be a low-pass (low-pass) filter, a gain may be 1.5 dB, and a Q value may be 1.414. A second segment of frequency response may be in a 50 Hz frequency band, a filter type may be a peak (peak) filter, a gain (gain) may be 2 dB, and a Q value may be 1.414. A third segment of frequency response may be in a 200 Hz frequency band, a filter type may be a peak (peak) filter, a gain may be 2.5 dB, and a Q value may be 1.414. A fourth segment of frequency response may be in a 400 Hz frequency band, a filter type may be a peak (peak) filter, a gain may be 3 dB, and a Q value may be 1.414. A fifth segment of frequency response may be in an 800 Hz frequency band, a filter type may be a high frequency shelf 1 (highself 1) filter, a gain may be 1.5 dB, and a Q value may be 1.414.

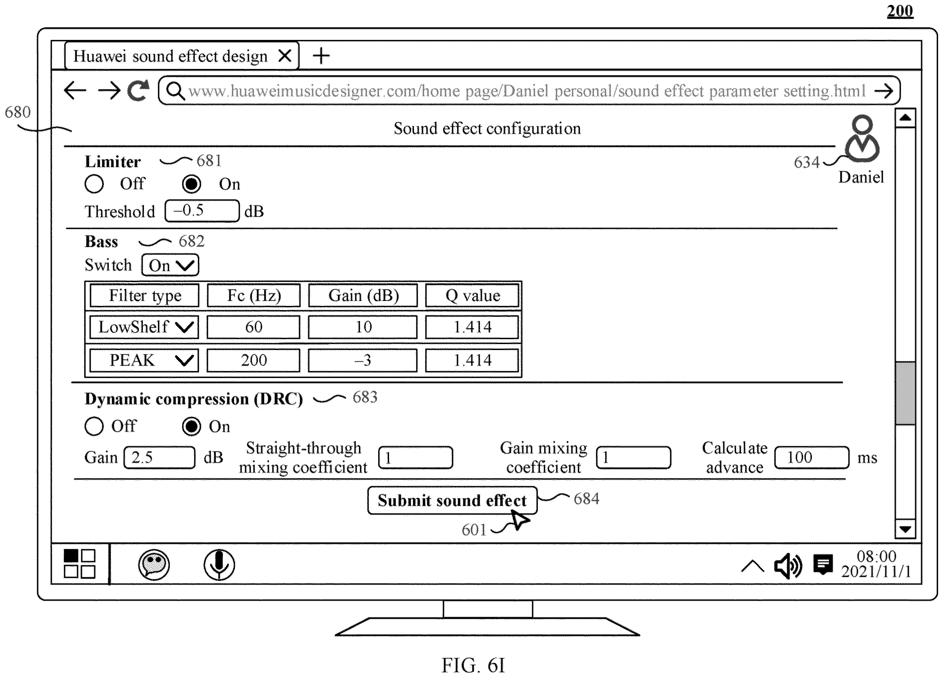

The electronic device 200 may receive an input of the user for sliding the sound effect production web page (for example, controlling the pointer 601 to drag a slider bar on the sound effect production web page to slide down). In response to the input, the electronic device 200 may display a part 680 of the sound effect production web page shown in FIG. 6I, and continue to set the sound effect parameter.

As shown in FIG. 6I, the part 680 of the sound effect production web page may include a limiter setting bar 681, a bass setting bar 682, a dynamic compression setting bar 683, and a sound effect submission control 684. A limiter status in the limiter setting bar 681 may be set to "on", and a threshold may be set to "-0.5 dB". A bass status in the bass setting bar 682 may be set to "on", and the filter may be set to a low frequency self (lowself) filter and a peak filter. A cut-off frequency of the low frequency self filter may be 60 Hz, a gain (gain) may be set to 10 dB, and a Q value may be set to 1.414. A center frequency of the peak filter may be 200 Hz, a gain may be set to -3 dB, and a Q value may be set to 1.414. A dynamic compression status in the dynamic compression setting bar 683 may be set to "on", a gain may be set to 2.5 dB, a straight-through mixing coefficient may be set to "1", a gain mixing coefficient may be set to "1", and a calculation advance may be set to "100 ms".

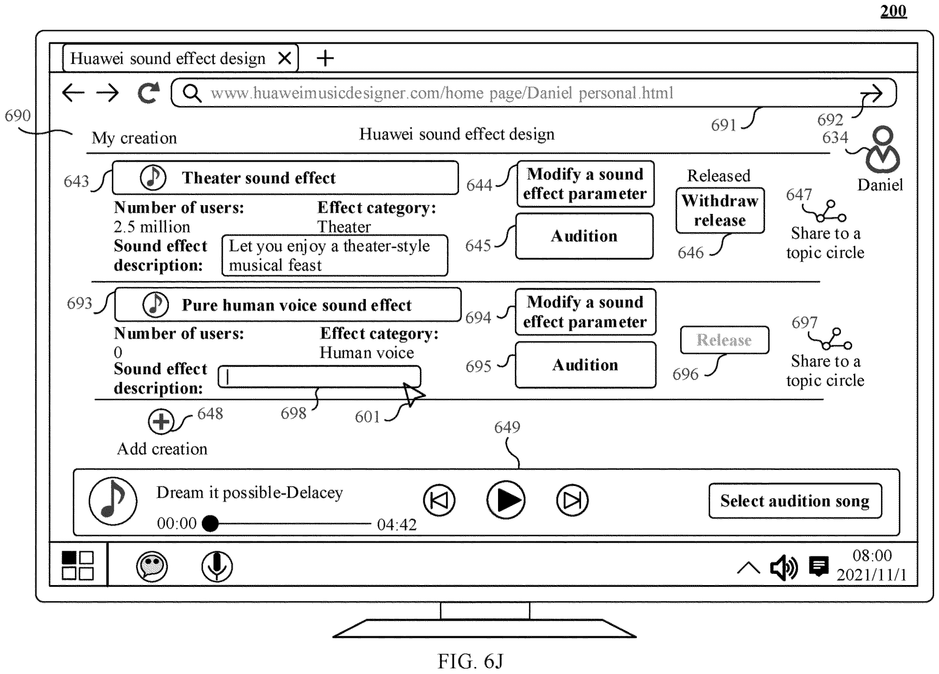

After the user sets the sound effect parameter on the sound effect production web page, the electronic device 200 may receive an input of the user for the sound effect submission control 684. In response to the input, the electronic device 200 may submit, to the cloud server 300, the sound effect parameter set by the user on the sound effect production web page, and display a personal sound effect home page 690 as shown in FIG. 6J.

As shown in FIG. 6J, the personal sound effect home page 690 may include a website address search box 691, a website address access control 692, an account setting control 634, related information or function controls of a plurality of created sound effects, a sound effect creation adding control 648, and a music playing control bar 649. The plurality of created sound effects include a theater sound effect and a pure human voice sound effect. Related information of the theater sound effect includes a name 643 of the theater sound effect, a number of users (for example, 2.5 million), an effect category (for example, surround), a sound effect description setting bar, where the sound effect description setting bar includes sound effect description information (for example, a text description like "let you enjoy a theater-style musical feast"), and the like. Function controls of the theater sound effect include a sound effect parameter modification control 644, a sound effect audition control 645, a release withdrawal control 646, and a topic circle sharing control 647. For the function controls of the theater sound effect, refer to the text description in the embodiment shown in FIG. 6E. Details are not described herein again. Related information of the pure human voice sound effect includes a name 693 of the pure human voice sound effect, a number of users (for example, 0), an effect category (for example, human voice), and the like. Function controls of the pure human voice sound effect include a sound effect parameter modification control 694, a sound effect audition control 695, a release control 696, and a topic circle sharing control 697. The sound effect parameter control 694 may be used to trigger the electronic device 200 to modify the sound effect parameter of the pure human voice sound effect. The sound effect audition control 695 may be used to trigger the electronic device 200 to obtain, from the cloud server 300, audio data processed based on a sound effect configuration file. The release control 696 may be used to trigger the electronic device 200 to request the cloud server 300 to push the pure human voice sound effect to the plurality of electronic devices 100. The topic circle sharing control 697 may be used to trigger the electronic device 200 to share, by using a topic server, the pure human voice sound effect to another user equipment that follows a specified topic.

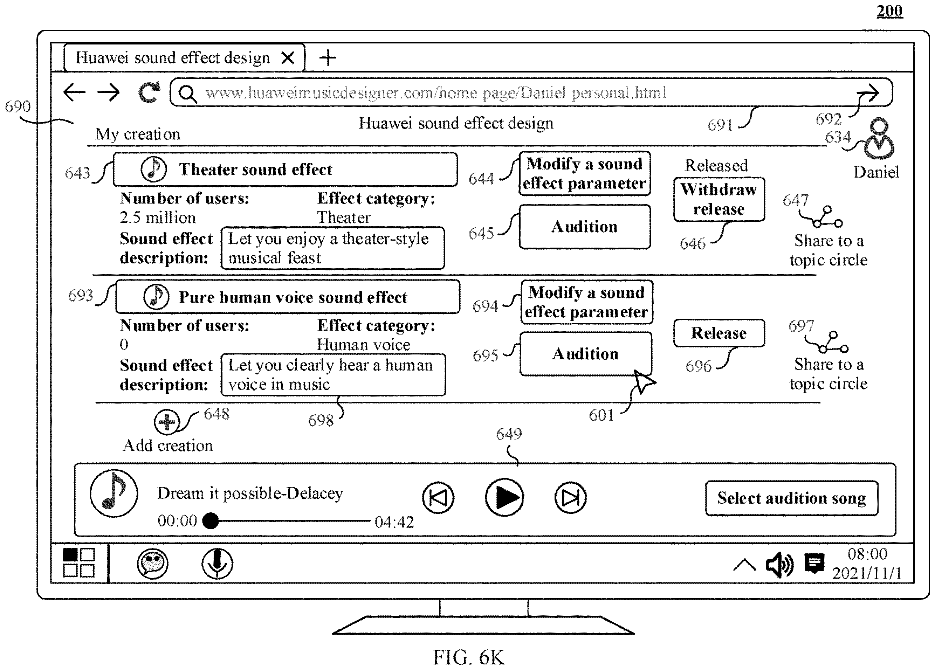

As shown in FIG. 6K, the electronic device 200 may receive a sound effect description "let you clearly hear a human voice in music" that is added by the user to the sound effect parameter of the pure human voice sound effect in the sound effect description setting column 698.

The electronic device 200 may receive an input (for example, left button single-clicking) of the user for the sound effect audition control 695. In response to the input, the electronic device 200 may request the cloud server 300 to perform sound effect processing on first audio data based on a sound effect configuration file of the pure human voice sound effect, to obtain second sound effect data. The electronic device 200 may obtain the first sound effect data or the second sound effect data from the cloud server 300.

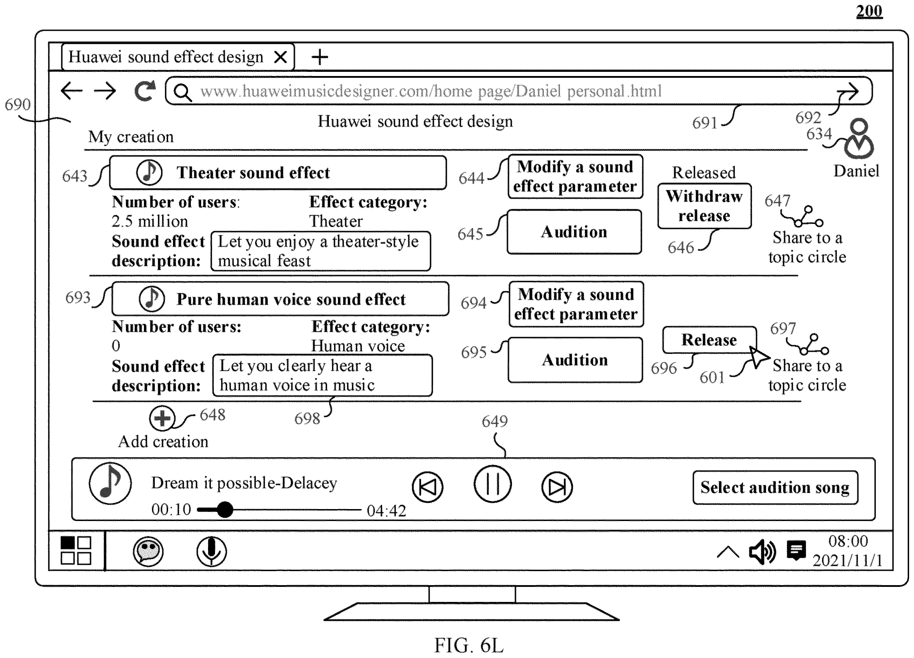

As shown in FIG. 6L, after the electronic device 200 obtains the first audio data that is sent by the cloud server 300 and to which no sound effect is added or the second audio data that is processed based on the sound effect configuration file of the pure human voice sound effect, the electronic device 200 may receive an input (for example, left button single-clicking) of the user for the playing control in the music playing control bar 649. In response to the input, the electronic device 200 may play the first audio data to which no sound effect is added, or play the second audio data processed based on the sound effect configuration file of the pure human voice sound effect, so that the user auditions the sound effect of the pure human voice sound effect for comparison.

When the user is satisfied with the sound effect of the pure human voice sound effect after auditioning the pure human voice sound effect, the electronic device 200 may receive an input (for example, left button single-clicking) of the user for the release control 696. In response to the input, the electronic device 200 may send a release request to the cloud server 300. After receiving the release request, the cloud server 300 may generate the sound effect configuration file based on the sound effect parameter of the pure human voice sound effect, and push a download link of the sound effect configuration file of the pure human voice sound effect to the plurality of electronic devices 100. The electronic device 100 may locally download, based on the download link, the sound effect configuration file of the pure human sound effect to the electronic device 100, obtain the sound effect parameter in the sound effect configuration file through parsing, and play music in a music player based on the sound effect parameter.

When the user is dissatisfied with the sound effect of the pure human voice sound effect after auditioning the pure human voice sound effect, the electronic device 200 may receive an input (for example, left button single-clicking) of the user for the sound effect parameter modification control 694. In response to the input, the electronic device 200 may re-request the cloud server 300 to open the sound effect production web page that displays the pure human voice sound effect, and receive a modification operation of the sound effect parameter of the pure human voice sound effect that is performed by the user on the sound effect production web page.

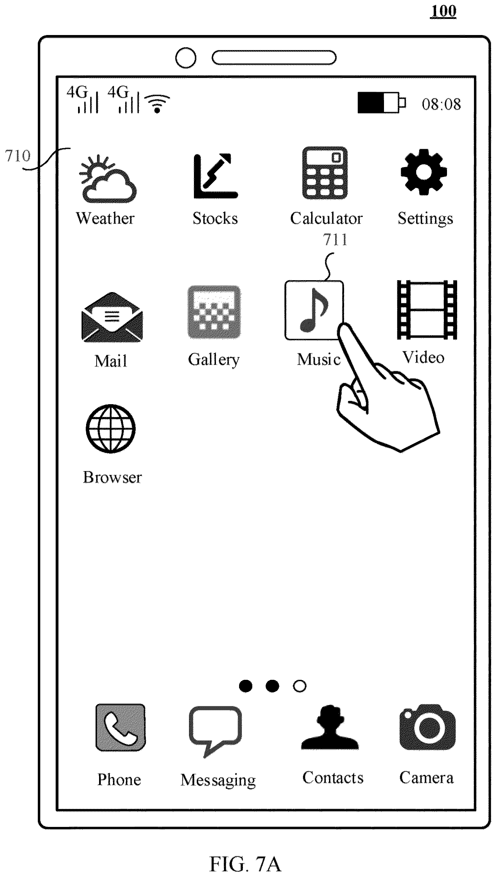

### FIG. 7A to FIG. 7E are schematic diagrams of example interfaces in which an electronic device 100 downloads and uses a sound effect from a cloud server 300 according to an embodiment of this application.

As shown in FIG. 7A, the electronic device 100 may display a desktop 710. The interface 710 displays a page on which application icons are placed, and the page includes a plurality of application icons (for example, a weather application icon, a stocks application icon, a calculator application icon, a settings application icon, a mail application icon, a gallery application icon, a music application icon 711, a video application icon, and a browser application icon). A page indicator is further displayed below the plurality of application icons, to indicate a location relationship between a currently displayed page and another page. There are a plurality of tray icons (for example, a phone application icon, a messaging application icon, a contacts application icon, and a camera application icon) below the page indicator, and the tray icons remain displayed during page switching.

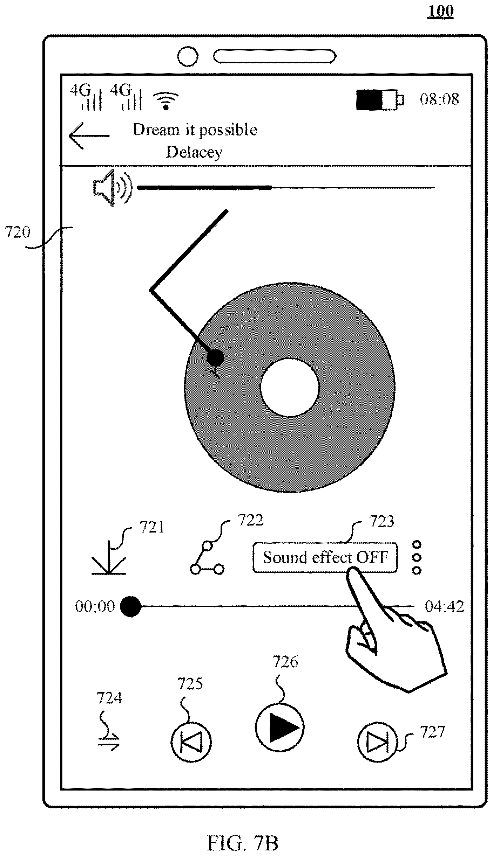

The electronic device 100 may receive an input (for example, a single click) of a user for the music application icon 711. In response to the input, the electronic device 100 may display a music playing interface 720 shown in FIG. 7B.

As shown in FIG. 7B, the music playing interface 720 includes a music name (for example, "Dream it possible"), a singer name (for example, "Delacey"), a playing progress bar, a song download control 721, a sharing control 722, a sound effect setting control 723, a playing order setting control 724, a previous song switching control 725, a play/pause control 726, a next song switching control 727, and the like. As shown in FIG. 7B, in this case, the electronic device 100 does not play audio based on a sound effect parameter, and a sound effect switch displayed on the sound effect setting control 723 is in an off state.

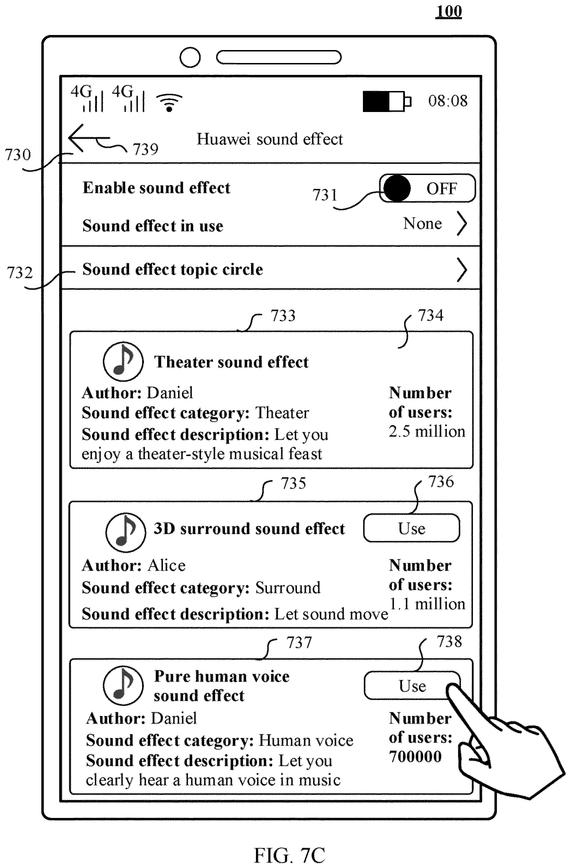

The electronic device 100 may receive an input (for example, a single click) of the user for the sound effect setting control 723, and in response to the input, the electronic device 100 may display a sound effect setting interface 730 shown in FIG. 7C.

As shown in FIG. 7C, the sound effect setting interface 730 includes a sound effect switch control 731, a sound effect topic circle control 732, one or more sound effect display bars, and a return control 739. The return control 739 may be used to trigger the electronic device 100 to return to display the music playing interface 720. The sound effect display bar may include sound effect display information and a use control. The sound effect display information includes a sound effect name, a sound effect author, a number of users, a sound effect category, a sound effect description, and the like. For example, the one or more sound effect display bars may include a theater sound effect display bar 733, a 3D surround sound effect display bar 735, and a pure human voice sound effect 737. A sound effect name in the theater sound effect display bar 733 may be "theater sound effect", a sound effect author may be "Daniel", a number of users may be "2.5 million", a sound effect category may be "theater", and a sound effect description may be "let you enjoy a theater-style musical feast". The theater sound effect display bar 733 may further include a use control 734, and the use control 734 may be used to trigger the electronic device 100 to play audio by using the theater sound effect. A sound effect name in the 3D sound effect display bar 735 may be "3D surround sound effect", a sound effect author may be "Alice", a number of users may be "1.1 million", a sound effect category may be "surround", and a sound effect description may be "let sound move". The 3D sound effect display bar 735 may further include a use control 736, and the use control 736 may be used to trigger the electronic device 100 to play audio by using the 3D surround sound effect. A sound effect name in the pure human voice sound effect display bar 737 may be "pure human voice sound effect", a sound effect author may be "Daniel", a number of users may be "700,000", and a sound effect description may be "let you clearly hear a human voice in music". The pure human voice sound effect display bar 737 may further include a use control 738, and the use control 738 may be used to trigger the electronic device 100 to play audio by using the pure human voice sound effect.

The electronic device 100 may receive an input (for example, a single click) of the user for the use control 738. In response to the input, the electronic device 100 may download a sound effect configuration file of the pure human voice sound effect from the cloud server 300, and obtain a sound effect parameter of the sound effect configuration file through parsing, and play audio based on the sound effect parameter in the sound effect configuration file.

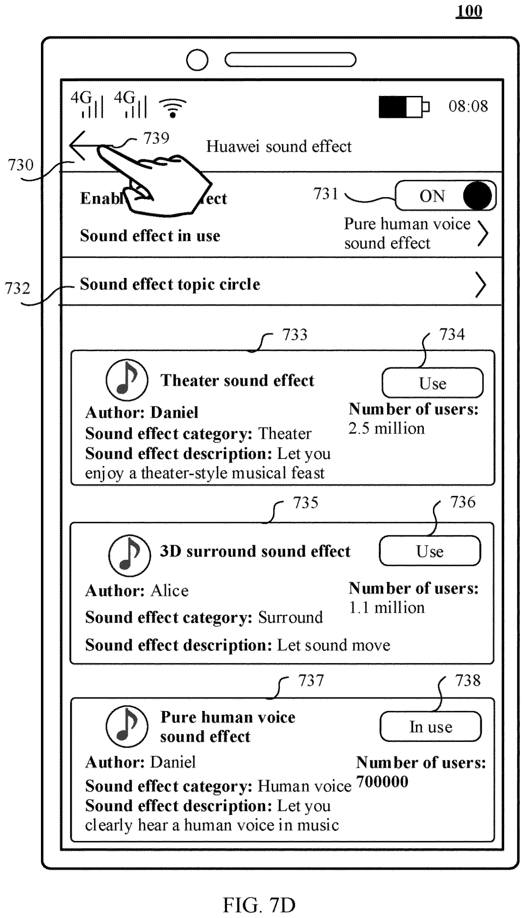

As shown in FIG. 7D, when the electronic device 100 plays audio based on the sound effect parameter of the pure human voice sound effect, prompt information such as "in use" may be displayed on the use control 738, to prompt the user that the electronic device 100 currently plays audio based on the sound effect parameter of the pure human voice sound effect.

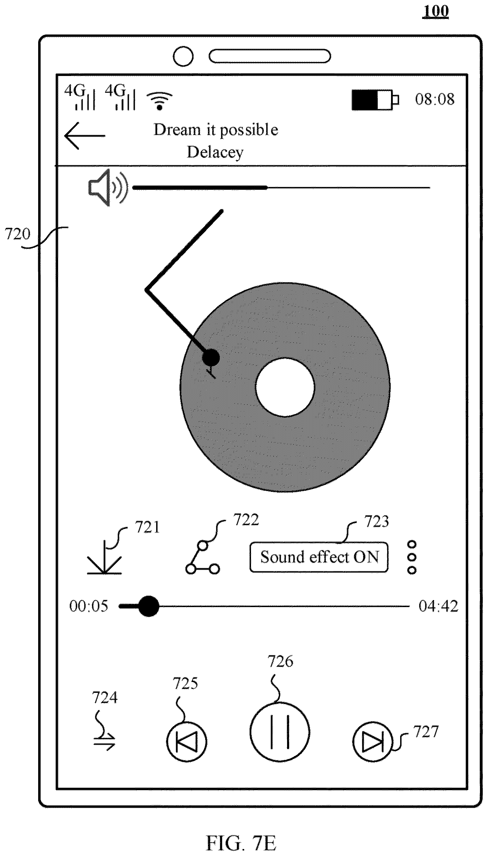

The electronic device 100 may receive an input (for example, a single click) of the user for the return control 739, and in response to the input, the electronic device 100 may display the music playing interface 720 shown in FIG. 7E.

As shown in FIG. 7E, the sound effect control 723 in the music playing interface 720 may be in an on state. The electronic device 100 may play audio based on the sound effect parameter of the pure human voice sound effect that is selected by the user.

The following describes an audio processing method provided in an embodiment of this application.

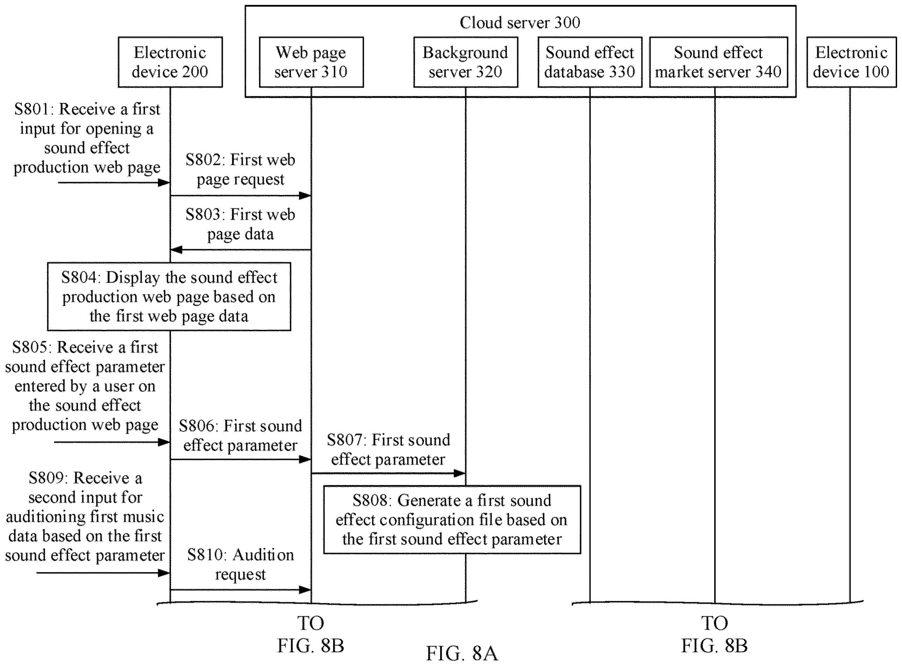

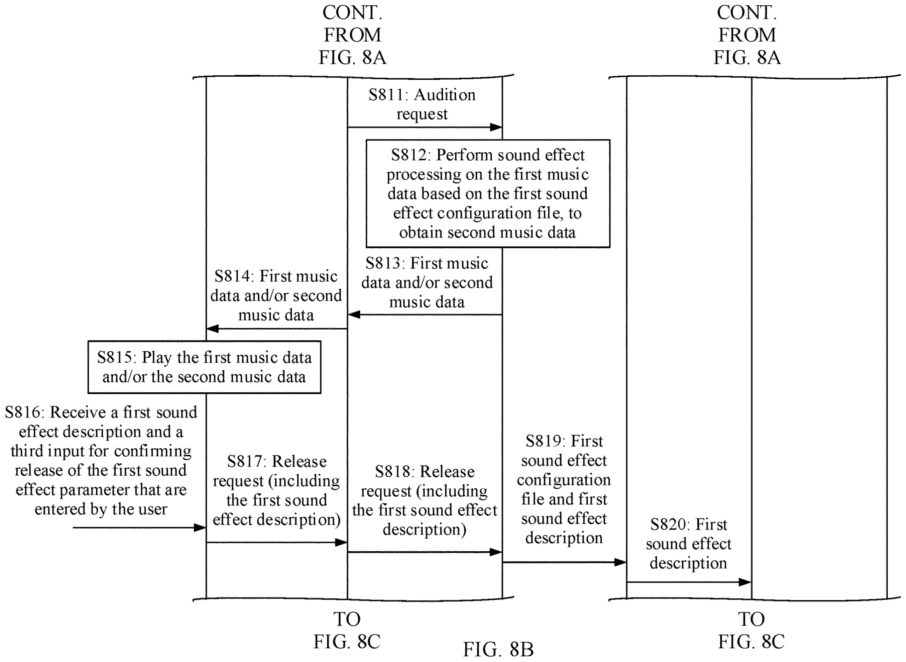

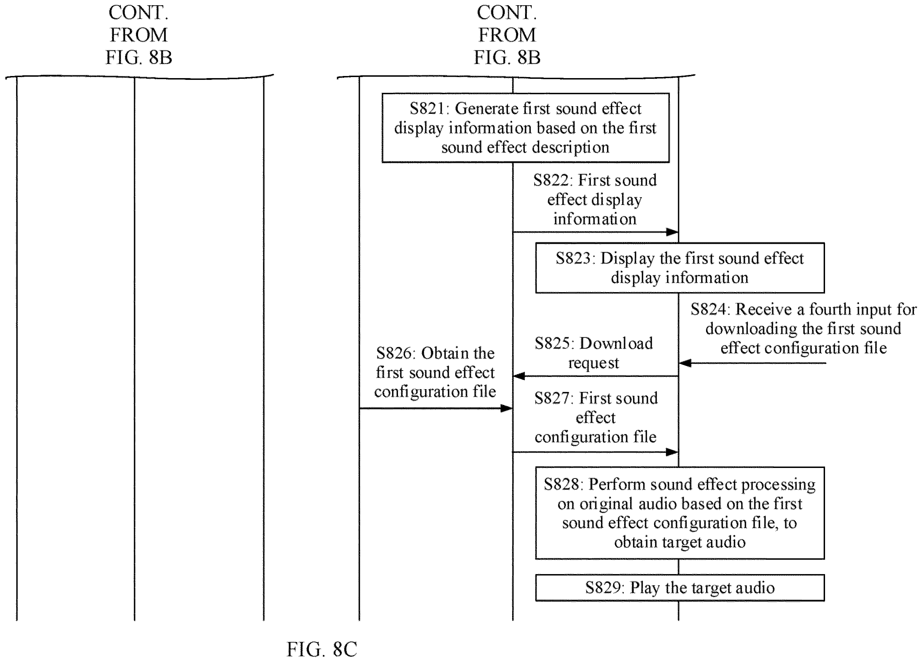

FIG. 8 is a schematic flowchart of an audio processing method according to an embodiment of this application.

The audio processing method may be applied to the audio processing system 10. The audio processing system 10 may include an electronic device 100, an electronic device 200, and a cloud server 300. In some embodiments, the cloud server 300 may include a web page server 310, a background server 320, a sound effect database 330, and a sound effect market server 340. This is not limited. In embodiments of this application, the cloud server 300 may further include more or fewer servers.

As shown in FIG. 8, the audio processing method may include the following steps.

S801: The electronic device 200 receives a first input for opening a sound effect production web page.

For example, the first input may be the input for the creation adding control 648 in the embodiment shown in FIG. 6E. In embodiments of this application, the first input is not limited to the input for the creation adding control 648, and may alternatively be another input, for example, accessing a website address of the sound effect production web page at a website address of a browser.

S802: The electronic device 200 may send a first web page request to the web page server 310 in response to the first input.

S803: After receiving the first web page request, the web page server 310 may send first web page data to the electronic device 200.

S804: The electronic device 200 may display the sound effect production web page based on the first web page data.

For the sound effect production web page, refer to the part 650 of the sound effect production web page in FIG. 6F, the part 660 of the sound effect production web page in FIG. 6G, the part 670 of the sound effect production web page in FIG. 6H, and the part 680 of the sound effect production web page in FIG. 6I. For a text description of the sound effect production web page, refer to the embodiments shown in FIG. 6F to FIG. 6I. Details are not described herein again.

S805: The electronic device 200 may receive a first sound effect parameter entered by a user on the sound effect production web page.

The first sound effect parameter may include one or more of the following: a gain adjustment parameter, a surround mode setting parameter, a surround effect setting parameter, a surround reverb setting parameter, a 3D special effect setting parameter, a frequency response setting parameter, a headset compensation setting parameter, a limiter setting parameter, a bass setting parameter, a dynamic compression setting parameter, and the like.

S806: The electronic device 200 may send the first sound effect parameter and a first sound effect parameter to the web page server 310.

S807: The web page server 310 may forward the received first sound effect parameter and the first sound effect description to the background server 320.

S808: The web page server 310 may generate a first sound effect configuration file based on the first sound effect parameter.

Specifically, the user may set the first sound effect parameter on the sound effect production web page opened by the electronic device 200, and click a sound effect submission control on the sound effect production web page after the first sound effect parameter is set. After the electronic device 200 receives an input of the user for the sound effect submission control, the electronic device 200 may return the first sound effect parameter set on the sound effect production web page to the web page server 310.

Setting a frequency response setting parameter is used as an example, and some web page code of the sound effect production web page may be shown as follows:

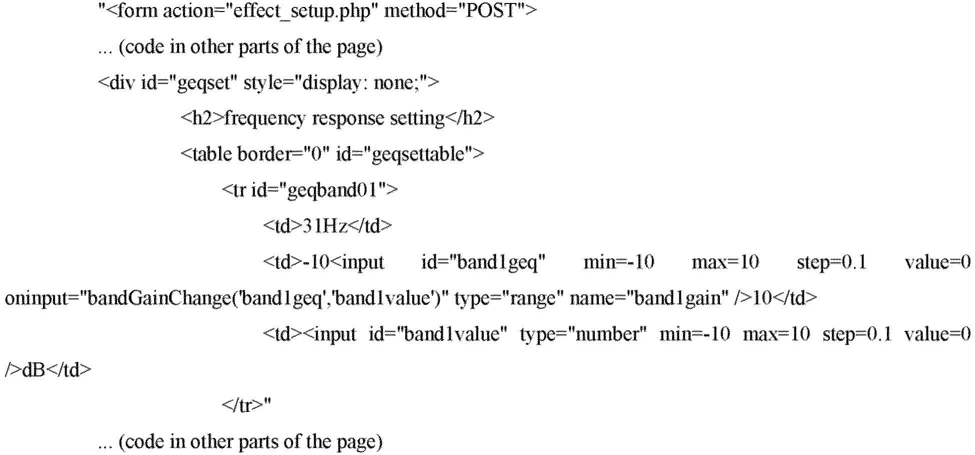

It can be learned from the foregoing code that the first sound effect parameter set on the sound effect production web page is submitted to an "effect setup.php" page, and a submission method of the sound effect parameter is "POST". When the first sound effect parameter is submitted based on the "POST" method, form data of the first sound effect parameter may be submitted to the web page server 310 in a form of a data block. A center frequency of a band 1 (bandlgeq) in a frequency response parameter setting bar on the sound effect production web page may be "31 Hz", a value range of a gain (bandlgain) of the band 1 may be set to -10 to 10, a value scale may be 0.1, and a unit is dB.

After setting the first sound effect parameter on the sound effect production web page, the user may submit the set first sound effect parameter to the web page server 310 by clicking the sound effect submission control on the sound effect production web page. The sound effect submission control on the sound effect production web page may be implemented by using the following code:

```
          "<input type="submit" value="submit a sound effect">
          </form>"
```

The "effect_setup.php" script page on the web page server 310 may receive the first sound effect parameter that is set by the user on the sound effect production web page and that is returned by the browser client on the electronic device 200. Some sound effect parameters on the "effect_setup.php" script page may be as follows:
"...&band1gain=2.3&band2gain=2.1&band3gain=0&ban4gain=1.6&band5gain--0.8&band6gain-1.2&band7gain=0&band8gain=0&band9gain=0.9&band10gain=1.5&..."

The foregoing example is merely used to explain this application and shall not be construed as a limitation.

In a possible implementation, in a process in which the electronic device 200 receives the first sound effect parameter entered by the user on the sound effect production web page, each time the user sets a sound effect parameter on the sound effect production web page, the electronic device 200 may return a result value of setting the sound effect parameter by the user to the web page server 310 for saving. After the user sets each sound effect parameter in the first sound effect parameter, the electronic device 200 may receive an input of the user for submitting the first sound effect parameter. In response to the input, the electronic device 200 may send a submission request to the web page server 310. After the web page server 310 receives the submission request, the web page server 310 may indicate the background server 320 to generate the first sound effect configuration file based on the first sound effect parameter. For a specific process in which the user sets and submits the first sound effect parameter on the electronic device 200, refer to the embodiments shown in FIG. 6F to FIG. 6I. Details are not described herein again.

S809: The electronic device 200 may receive a second input of the user for auditioning first music data based on the first sound effect parameter.

The second input may be the input for the sound effect audition control 695 in the embodiment shown in FIG. 6K. For specific content, refer to the embodiment shown in FIG. 6J. Details are not described herein again.

S810: The electronic device 200 may send the audition request to the web page server 310 in response to the second input.

The audition request may include identification information of the to-be-auditioned first music data and identification information of the first sound effect parameter. For example, the identification information of the first music data may include a music name, a singer name, a music version, and the like of the first music data.

The electronic device 200 may receive an operation performed by the user on the select audition music control in the music playing control bar 649 shown in FIG. 6J, to trigger the electronic device 200 to obtain the identification information that is of the first music data and that is entered by the user.

S811: The web page server 310 may forward the audition request to the background server 320.

Specifically, the web page server 310 may send the identification information of the first music data and the identification information of the first sound effect parameter in the audition request to the background server 320.

S812: The background server 320 may perform sound effect processing on the first music data based on the first sound effect configuration file, to obtain second music data.

Specifically, after receiving the audition request forwarded by the web page server 310, the background server 320 may obtain the first music data from a music database (not shown in FIG. 8) based on the identification information of the first music data in the audition request, and locally obtain the first sound effect configuration file from the background server 320 based on the identification information of the first sound effect parameter in the audition request. After obtaining the first music data and the first sound effect configuration file, the background server 320 may perform sound effect processing on the first music data based on the first sound effect parameter in the first sound effect configuration file, to obtain the second music data.

In a possible implementation, the background server 320 may alternatively use preset first music data as original audition audio data. The background server 320 may perform sound effect processing on the preset first music data based on the first sound effect configuration file, to obtain the second music data.

S813: The background server 320 may send the first music data and/or the second music data to the web page server 310.

S814: The web page server 310 may send the first music data and/or the second music data to the electronic device 200.

S815: The electronic device 200 may play the second music data and/or the first music data.

After receiving the first music data and/or the second music data, the electronic device 200 plays the first music data or the second music data based on a selection of the user, to audition a sound effect of the first sound effect parameter.

In a possible implementation, the background server 320 may directly send the first music data or the second music data to the electronic device 200 without being forwarded by the web page server 310.

S816: The electronic device 200 may receive the first sound effect description and a third input for confirming release of the first sound effect parameter that are entered by the user.

The first sound effect description may include one or more of a sound effect name and a sound effect description of the first sound effect parameter, a headset application model, a music style type, a sound effect type, and the like. For example, the sound effect description may be "let you enjoy a theater-style musical feast."

In a possible implementation, the sound effect name, the sound effect description, the headset applicable model, the music style type, and the sound effect type in the first sound effect description may be set by the user when the user sets the sound effect parameter on the sound effect production web page, or may be set by the user when the user releases the first sound effect parameter after auditioning the sound effect of the first sound effect parameter. In some other possible implementations, some content of the first sound effect description may be set by the user when the user sets the sound effect parameter on the sound effect production web page, and the other content of the first sound effect description may be set by the user when the user releases the first sound effect parameter after auditioning the sound effect of the first sound effect parameter.

When the user is satisfied with the sound effect of the first sound effect parameter, the electronic device 200 may receive the third input of the user for confirming the release of the first sound effect parameter. For the third input, refer to the input of the user for the release control 696 in the embodiment shown in FIG. 6K. For specific content, refer to the embodiment shown in FIG. 6K. Details are not described herein again.

S817: The electronic device 200 may send a release request to the web page server 310 in response to the third input.

The release request includes the identification information of the first sound effect parameter and the first sound effect description.

S818: The web page server 310 may forward the release request to the background server 320.

S819: The background server 320 may store the first sound effect configuration file and the first sound effect description in the sound effect database 330.

S820: The sound effect market server 340 may obtain the first sound effect description from the sound effect database 330.

The sound effect market server 340 may periodically query the sound effect database 300 for a newly released sound effect configuration file and a sound effect description. When the sound effect market server 340 finds the newly released first sound effect configuration file and the first sound effect description from the sound effect database 330, the sound effect market server 340 may obtain the first sound effect description from the sound effect database 330.

In a possible implementation, after the background server 320 stores the first sound effect configuration file and the first sound effect description in the sound effect database 330, the background server 320 may send release notification information to the sound effect market server 340. The release notification information includes the identification information of the first sound effect configuration file and the identification information of the first sound effect description. After receiving the release notification information, the sound effect market server 340 may query the first sound effect configuration file and the first sound effect description from the sound effect database 330 based on the identification information of the first sound effect configuration file and the identification information of the first sound effect description, and obtain the first sound effect description.

In a possible implementation, the sound effect market server 340 may alternatively receive a sound effect display request sent by the electronic device 100, where the sound effect display request is used to request the sound effect market server 340 to send sound effect display information to the electronic device 100. After receiving the sound effect display request, the sound effect market server 340 may obtain, from the sound effect database, one or more released sound effect configuration files and a sound effect description corresponding to each sound effect configuration file. The one or more sound effect configuration files include the first sound effect configuration file, and the sound effect description corresponding to each sound effect configuration file includes the first sound effect description.

S821: The sound effect market server 340 may generate first sound effect display information based on the first sound effect description.

S822: The sound effect market server 340 may send the first sound effect display information to the electronic device 100.

S823: The electronic device 100 may display the first sound effect display information.

After obtaining the first sound effect description, the sound effect market server 340 generates the first sound effect description into the first sound effect display information on a sound effect display web page, and sends web page data of the sound effect display web page to the electronic device 100. After receiving the web page data of the sound effect display web page, the electronic device 100 may display the sound effect display web page.

For example, after receiving the web page data of the sound effect display web page, the electronic device 100 may display the sound effect display web page on the sound effect setting interface 730 shown in FIG. 7C. The sound effect display web page may include one or more sound effect display bars. The one or more sound effect display bars includes a display bar of the first sound effect configuration file, and the display bar of the first sound effect configuration file includes the first sound effect display information.

In a possible implementation, the sound effect market server 340 may directly send the first sound effect description to the electronic device 100. The electronic device 100 may generate the first sound effect display information based on the first sound effect description, and display the first sound effect display information.

For another example, after receiving the first sound effect description of the sound effect market server 340, the electronic device 100 may generate the first sound effect display information, and place the first sound effect display information into the sound effect setting interface 730 shown in FIG. 7C. The first sound effect display information may be the pure human voice sound effect setting bar 737 on the sound effect setting interface 730 shown in FIG. 7C.

S824: The electronic device 100 may receive a fourth input of the user for downloading the first sound effect configuration file.

The fourth input may be the input for the use control 738 in the embodiment shown in FIG. 7C. For specific content, refer to the embodiment shown in FIG. 7C. Details are not described herein again.

S825: The electronic device 100 may send a download request to the sound effect market server 340 in response to the fourth input.

The download request includes the identification information of the first sound effect configuration file.

S826: The sound effect market server 340 may obtain the first sound effect configuration file from the sound effect database 330 in response to the download request.

S827: The sound effect market server 340 may send the first sound effect configuration file to the electronic device 100.

S828: The electronic device 100 may perform sound effect processing on original audio based on the first sound effect configuration file, to obtain target audio.

After downloading the first sound effect configuration file from the sound effect market server 340, the electronic device 100 may obtain the first sound effect parameter from the first sound effect configuration file through parsing. The electronic device 100 may input the first sound effect parameter and the original audio to a sound effect algorithm, and process the original audio to obtain the target audio.

Each sound effect parameter in the first sound effect configuration file may be represented by one or more values.

For example, content of the first sound effect configuration file may be as follows:

```
          "0x0, 0x0, 0x2, 0x0, 0x8, 0x2, 0x0, 0x200, 0x2c3, 0x3e8, 0x32, 0x64, 0xc8, ..."
```

In the foregoing example, a first value (0x0) in the first sound effect configuration file may indicate that no headset compensation file is selected in the first sound effect parameter. A second value (0x0) in the first sound effect configuration file may indicate that no sound effect algorithm plug-in is selected in the first sound effect parameter. A third value (0x2) in the first sound effect configuration file may indicate that a gain adjustment value in the first sound effect parameter is 2 dB. A fourth value (0x0) in the first sound effect configuration file may indicate that a surround mode in the first sound effect parameter is in an off state. A fifth value (0x8) in the first sound effect configuration file may indicate that a surround effect in the first sound effect parameter is a grand effect. A sixth value (0x8) in the first sound effect configuration file may indicate that a surround effect in the first sound effect parameter is a grand effect. A seventh value (0x2) in the first sound effect configuration file may indicate that surround reverb in the first sound effect parameter is KTV reverb. The seventh value (0x2) in the first sound effect configuration file may indicate that surround reverb in the first sound effect parameter is KTV reverb. An eighth value (0x0) in the first sound effect configuration file may indicate that a 3D special effect in the first sound effect parameter is in an off state. A ninth value to an eighteenth value in the first sound effect configuration file may indicate a frequency response setting parameter in the first sound effect parameter, and the like. The foregoing example is merely used to explain this application and shall not be construed as a limitation.

S829: The electronic device 100 may play the target audio.

In some application scenarios, after requesting the cloud server 300 to release the sound effect configuration file, the electronic device 200 may send, to the cloud server 300, a sharing request for sharing the sound effect configuration file and topic content to a specified topic circle. After receiving the sharing request, the cloud server 300 may push the download link and topic description content of the sound effect configuration file to another user equipment that follows the specified topic circle. A user may view, on the another user equipment, the download link and the description content of the sound effect configuration file in the specified topic circle, and like, retweet, and comment on the download link and the description content of the sound effect configuration file. The cloud server 300 may determine a recommendation priority of the sound effect configuration file with reference to evaluation information of the user on the sound effect configuration file. In this way, topicality of the sound effect function when the user listens to music and participation of the user in the sound effect function can be increased, so that the user can discover a hot sound effect in time.

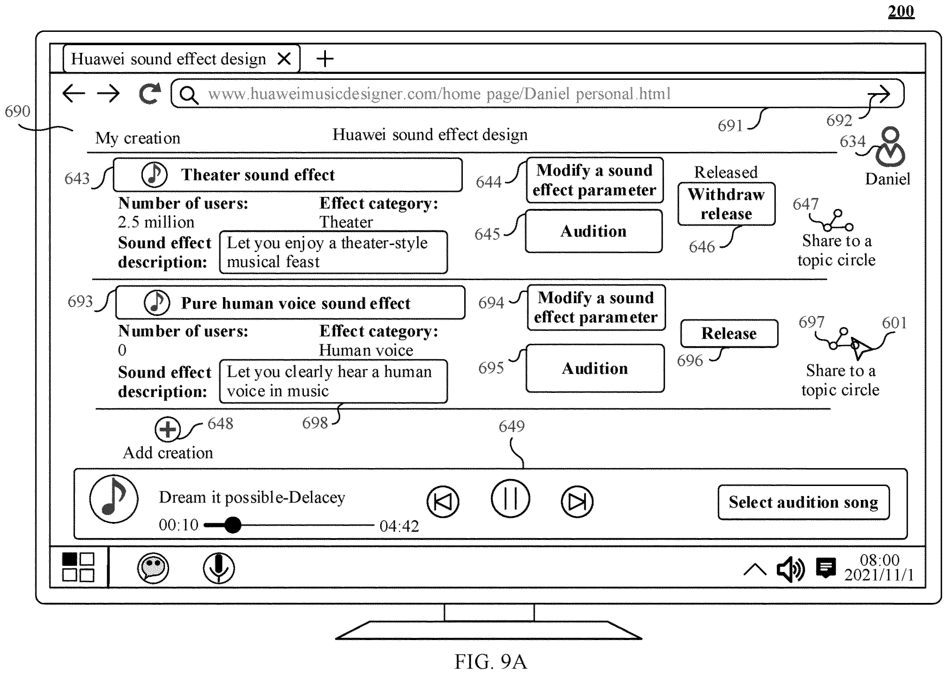

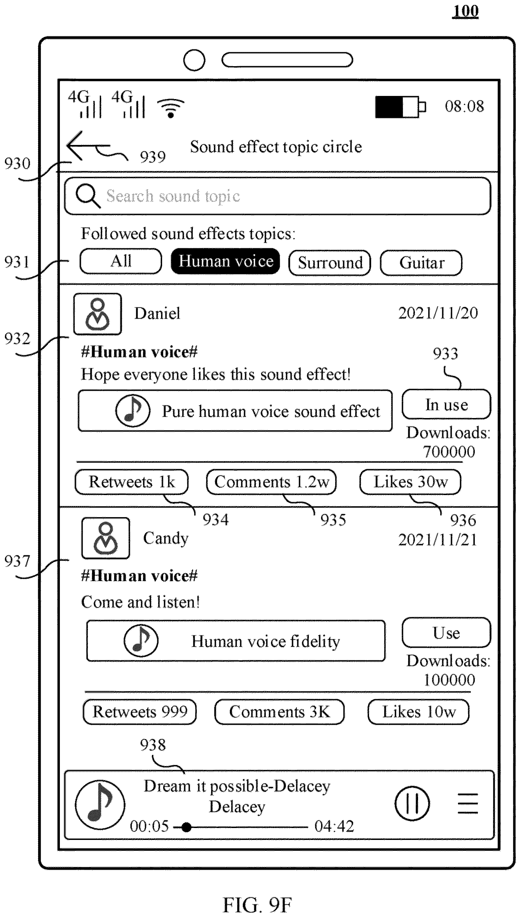

### FIG. 9A to FIG. 9C are schematic diagrams of example interfaces in which an electronic device 200 shares a topic tweet of a sound effect to a sound effect topic circle according to an embodiment of this application.

For example, as shown in FIG. 9A, the electronic device 200 may display the personal sound effect home page 690. For text description of the personal sound effect home page 690, refer to the embodiment shown in FIG. 6J. Details are not described herein again.

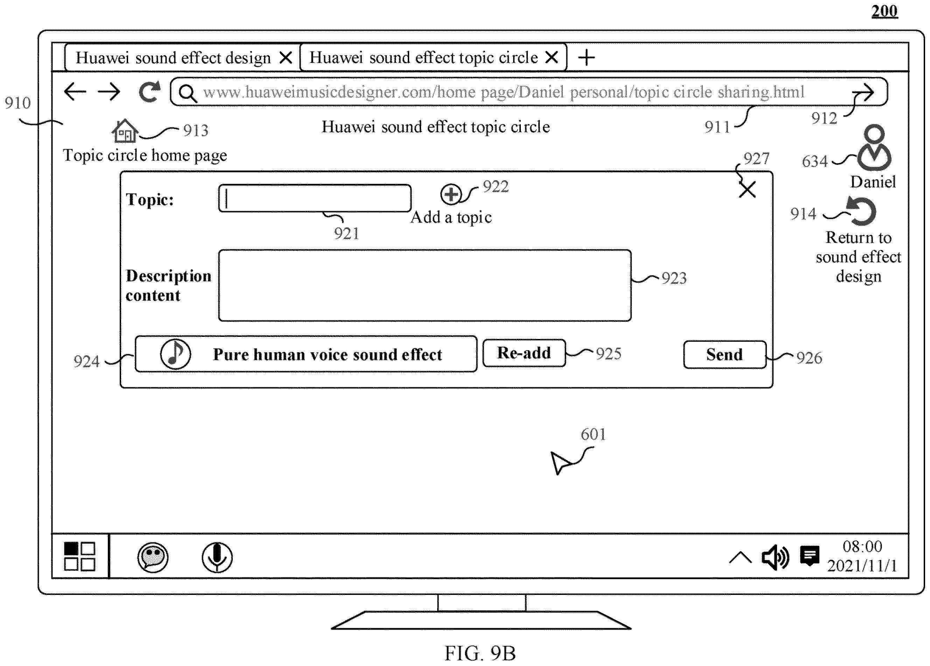

The electronic device 200 may receive an input (for example, left button single-clicking) of the user for the topic circle sharing control 697, and in response to the input, the electronic device 200 may jump to display a topic sharing editing page 910 shown in FIG. 9B.

As shown in FIG. 9B, the topic sharing editing page 910 may include a topic circle home page control 913, a return control 914, a topic editing box 921, a topic adding control 922, a description content editing box 923, a pure human voice sound effect download link 924, a sound effect link adding control 925, a sending control 926, and a cancel control 927. The topic circle home page control 913 may be used to trigger the electronic device 200 to jump to display a topic circle home page. The return control 914 may be used to trigger the electronic device 200 to return to display the personal sound effect home page 690 shown in FIG. 9A. The topic editing box 921 may be used to receive a topic name entered by the user. The topic adding control 922 may be used to trigger the electronic device 200 to add a topic name to the pure human voice sound effect. The topic description content editing box 923 may be used to receive description content input by the user. The pure human voice sound effect download link 924 may be used to download a sound effect configuration file of the pure human voice sound effect. The re-adding 925 may be used to trigger the electronic device 200 to re-add a sound effect download link. The sending control 926 may be used to trigger the electronic device 200 to share the topic name, the description content, and the sound effect link to the sound effect topic circle. The cancel control 927 may be used to trigger the electronic device 200 to cancel sharing of the download link of the pure human voice sound effect to the topic circle.

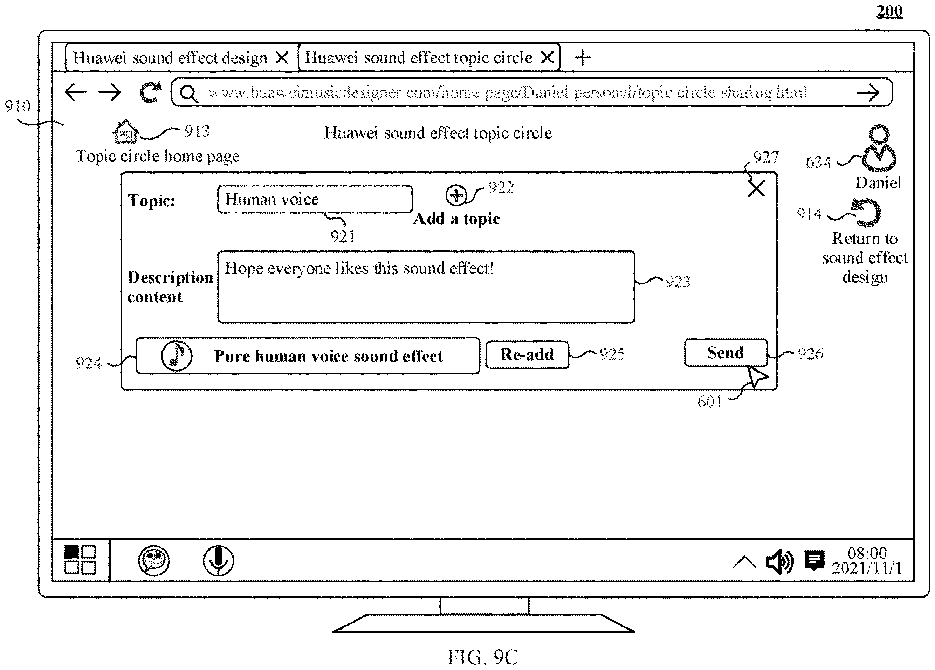

As shown in FIG. 9C, the electronic device 200 may receive a topic name (for example, "human voice") entered by the user in the topic editing box 921 and topic description content entered in the topic description content editing box 923 (for example, "I hope you like the sound effect! ").

After the user enters the topic name and the description content, the electronic device 200 may receive an input (for example, left button single-clicking) of the user for the sending control 926. In response to the input, the electronic device 200 may send, to the cloud server 300, the topic name and the topic content that are entered by the user. The cloud server 300 may push the topic tweet that includes the topic name, the topic content, and the download link that are of the pure human voice sound effect to another user equipment that has an account that follows the topic name.

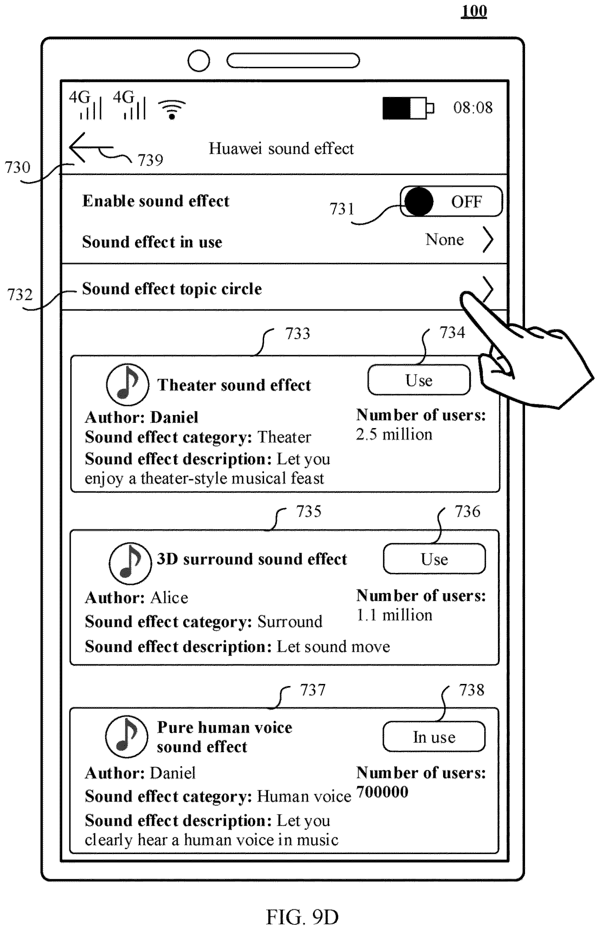

### FIG. 9D to FIG. 9F are schematic diagrams of interfaces in which an electronic device 100 views a sound effect topic circle according to an embodiment of this application.

As shown in FIG. 9D, the electronic device 100 may display the sound effect setting interface 730. For text description of the sound effect setting interface 730, refer to the embodiment shown in FIG. 7C. Details are not described herein again.

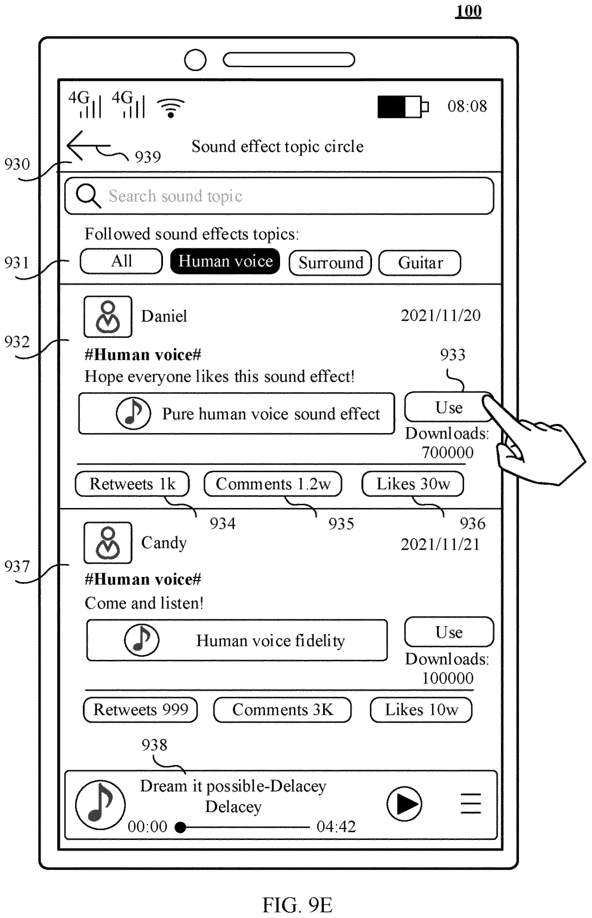

The electronic device 100 may receive an input (for example, single-clicking) of the user for the sound effect topic circle 732, and in response to the input, the electronic device 100 may display a sound effect topic circle interface 930 shown in FIG. 9E.

As shown in FIG. 9E, the sound effect topic circle interface 930 may include a followed topic selection bar 931, one or more topic tweets, and a music playing control bar 938. A use control, a retweet control, a comment control, a like control, and the like may be displayed below each topic tweet. The followed topic selection bar 931 displays topic names of one or more sound effects that are followed by a music application account logged in to the electronic device 100, for example, "human voice", "surround", "guitar", and the like. The user may select a topic name from the followed topic selection bar 931, to trigger the electronic device 100 to display a topic tweet under the topic name. For example, after the user selects the topic name "human voice" in the followed topic selection bar 931, the electronic device 100 may display a topic tweet 932 and a topic tweet 937.

An author of the topic tweet 932 may be "Daniel", a sending time may be "2021/11/20", a topic name may be "human voice", and description content may be "hope everyone likes this sound effect!". The topic tweet 932 may be attached with a download link of the pure human voice sound effect and a use control 933. The use control 933 may be used to trigger the electronic device 100 to download and use, from the cloud server 300 based on the download link of the pure human voice sound effect, a sound effect configuration file of the pure human voice sound effect, to play music. A number of retweets of the topic tweet 932 may be "1k", a number of comments may be "12w", and a number of likes may be "30w".

An author of the topic tweet 933 may be "Candy", a sending time may be "2021/11/21", a topic name may be "human voice", and description content may be "come and listen!". The topic tweet 932 may be attached with a download link of the human voice fidelity sound effect and a use control 934. The use control 934 may be used to trigger the electronic device 100 to download and use, from the cloud server 300 based on the download link of the human voice fidelity sound effect, a sound effect configuration file of the human voice fidelity sound effect, to play music. A number of retweets of the topic tweet 932 may be "999", a number of comments may be "3k", and a number of likes may be "10w".

The electronic device 100 may receive an input (for example, single-clicking) of the user for the use control 933, and in response to the input, the electronic device 100 may download and use, from the cloud server 300 based on the download link of the pure human voice sound effect, the sound effect configuration file of the pure human voice sound effect, to play music.

### The following describes a sound effect topic circle sharing process according to embodiments of this application.

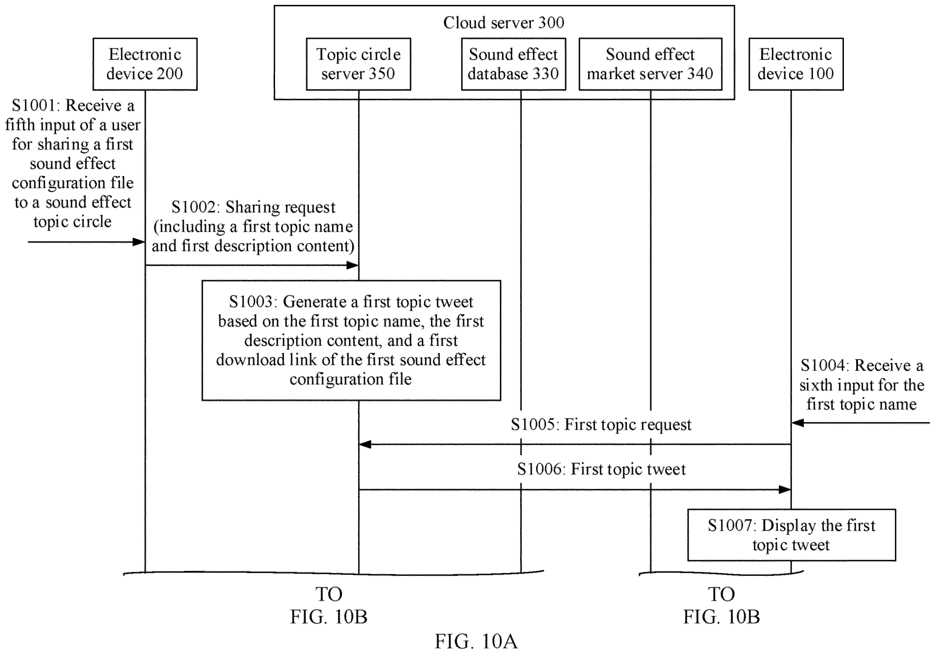

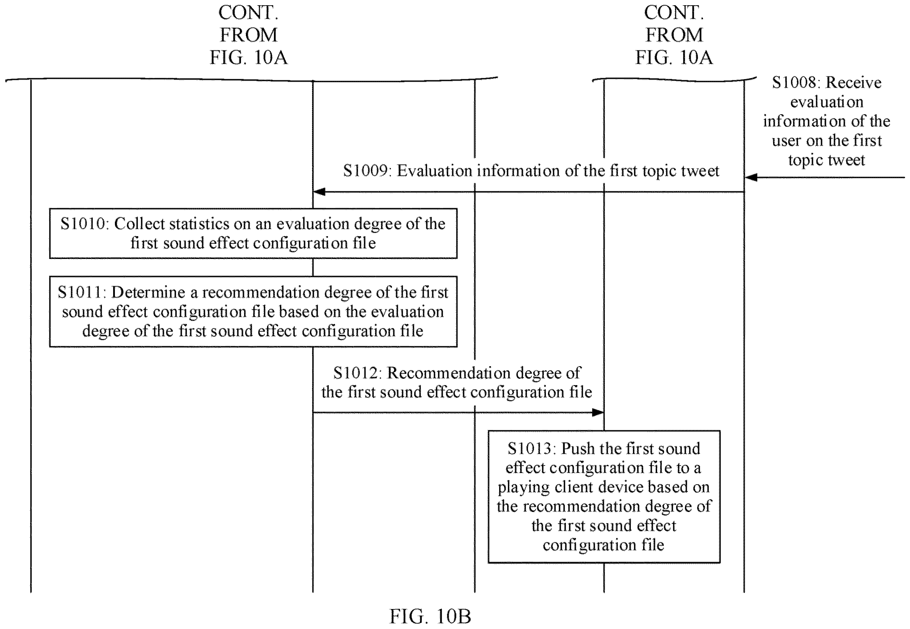

FIG. 10 is a schematic flowchart of an audio processing method according to an embodiment of this application.

The audio processing method may be applied to the audio processing system 10. The audio processing system 10 may include an electronic device 100, an electronic device 200, and a cloud server 300. In some embodiments, the cloud server 300 may include a sound effect database 330, a sound effect market server 340, and a topic circle server 350. This is not limited. In embodiments of this application, the cloud server 300 may further include more or fewer servers.

As shown in FIG. 10, the sound effect topic circle sharing process may include the following steps.

S1001: The electronic device 200 receives a fifth input of a user for sharing a first sound effect configuration file to a sound effect topic circle.

S1002: The electronic device 200 may send a sharing request to the topic circle server 310 in response to the fifth input. The sharing request includes a first topic name and first description content that are entered by the user.

The electronic device 200 may receive the fifth input of the user, and set the first topic name and the first description content for sharing the first sound effect configuration file to the sound effect topic circle. After setting the first topic name and the first description content, the electronic device 200 may send the sharing request to the topic circle server 350.

For example, the fifth input may be a combination input in the embodiments shown in FIG. 9A to FIG. 9C, for example, a combination input of the input for sharing to the topic circle sharing control 697, the text input in the topic editing box 921, the text input in the description content editing box 923, and the input for the sending control 926. For a specific sharing operation process, refer to the embodiments shown in FIG. 9A to FIG. 9C. Details are not described herein again.

S1003: In response to the sharing request, the topic circle server 350 generates a first topic tweet based on the first topic name, the first description content, and a first download link of the first sound effect configuration file in the sharing request.

The first topic tweet may include an author (for example, Daniel) of the first topic tweet, a sending time of the first topic tweet (for example, "November 20, 2021"), the first topic name (for example, "human voice"), the first description content (for example, "hope everyone likes this sound effect! "), a sound effect name of the first sound effect configuration file (for example, "pure human voice sound effect"), the download link of the first sound effect configuration file, and the like.

S1004: The electronic device 100 may receive a sixth input of the user for the first topic name.

S1005: The electronic device 100 may send a first topic request to the topic circle server 350 in response to the sixth input. The first topic request includes the first topic name.

The sixth input may be an input in which the user selects the first topic name in the followed topic selection bar 931 in the embodiment shown in FIG. 9E. For example, the first topic name may be "human voice". For specific content, refer to the foregoing embodiment shown in FIG. 9E. Details are not described herein again.

S1006: The topic circle server 350 may send a first topic tweet to the electronic device 100 in response to the first topic request.

S1007: The electronic device 100 may display the first topic tweet.

After receiving the first topic request, the background server 320 may send one or more topic tweets under the first topic name to the electronic device 100 through the web page server 310. The one or more topic tweets include the first topic tweet.

For example, the topic tweets under the first topic name received by the electronic device 100 may include the topic tweet 932 and the topic tweet 937 in the embodiment shown in FIG. 9E. The first topic tweet may be the topic tweet 932 in the embodiment shown in FIG. 9E. For specific content, refer to the foregoing embodiment shown in FIG. 9E. Details are not described herein again.

S1008: The electronic device 100 may receive evaluation information of the user on the first topic tweet.

The evaluation information of the first topic tweet includes like, retweet, comment information, and the like.

S1009: The electronic device 100 may send the evaluation information of the first topic tweet to the topic circle server 350.

S1010: The topic circle server 350 may collect statistics on an evaluation degree of the first sound effect configuration file based on the evaluation information of the topic tweet associated with the first sound effect configuration file.

The topic circle server 350 may receive evaluation information that is fed back by a plurality of playing client devices and that is of a plurality of topic tweets associated with the first sound effect configuration file. The evaluation information that is fed back by the plurality of playing client devices and that is of the plurality of topic tweets associated with the first sound effect configuration file includes the evaluation information that is of the first topic tweet and that is fed back by the electronic device 100.

The topic circle server 350 may determine the evaluation degree of the first sound effect configuration file based on the evaluation information that is fed back by the plurality of playing client devices and that is of the plurality of topic tweets associated with the first sound effect configuration file. A larger quantity of likes in the evaluation information of the plurality of topic tweets associated with the first sound effect configuration file indicates a higher evaluation degree of the first sound effect configuration file. A larger number of positive reviews associated with the first sound configuration file indicates a higher evaluation degree of the first sound effect configuration file. A larger quantity of retweets of the plurality of topic tweets associated with the first sound effect configuration file indicates a higher evaluation degree of the first sound effect configuration file. In embodiments of this application, an evaluation degree determining algorithm is not limited.

S1011: The topic circle server 350 may determine a recommendation degree of the first sound effect configuration file based on the evaluation degree of the first sound effect configuration file.

The recommendation degree of the first sound effect configuration file may indicate a recommendation priority of the first sound effect configuration file. A higher recommendation degree of the first sound effect configuration file indicates a higher recommendation priority of the first sound effect configuration file.

S1012: The topic circle server 350 may send the recommendation degree of the first sound effect configuration file to the sound effect market server 340.

S1013: The sound effect market server 340 may push the first sound effect configuration file to a playing client device based on the recommendation degree of the first sound effect configuration file.

The sound effect market server 340 may preferentially recommend a sound effect configuration file with a high recommendation degree to the playing client device.

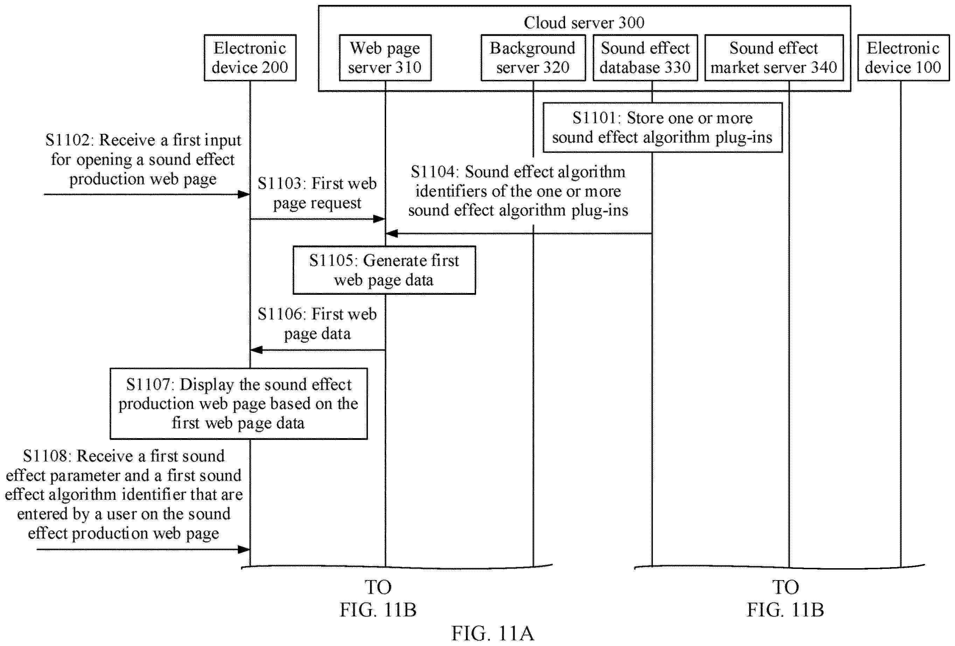

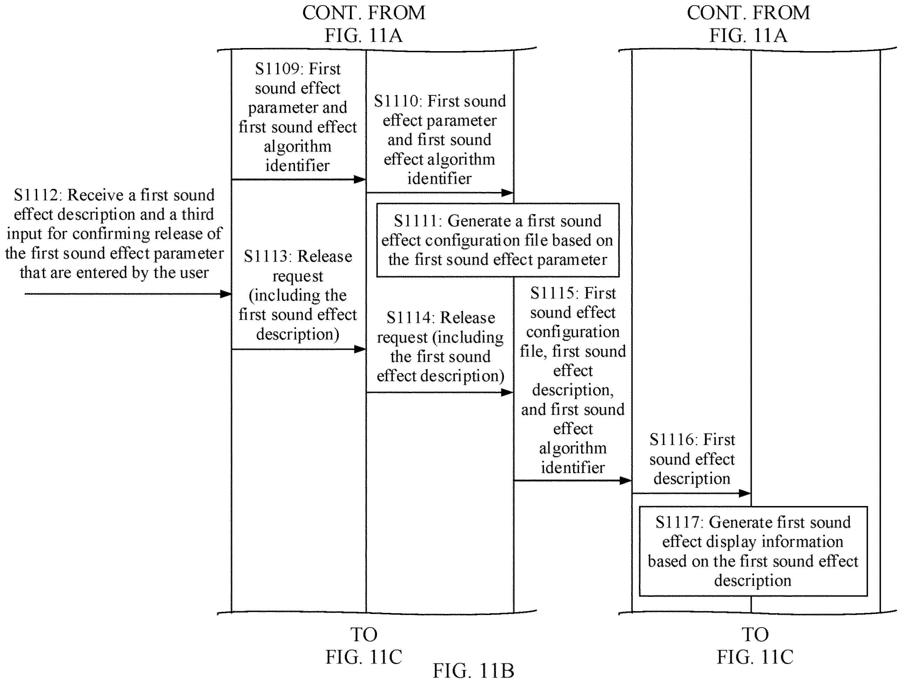

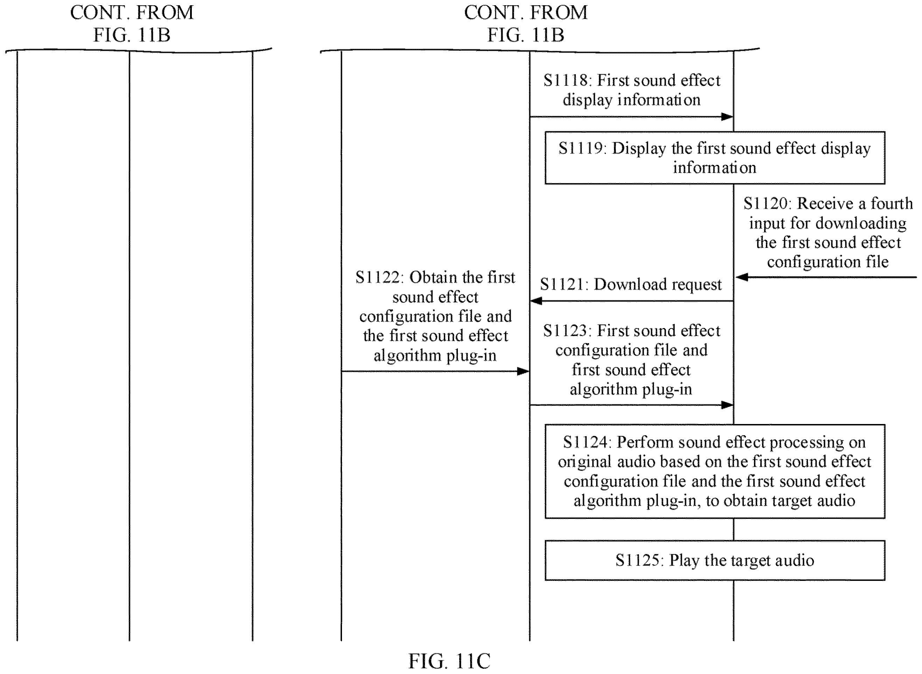

In a possible implementation, the topic circle server 350 may be different from the web page server 310 and the background server 320 in the embodiment shown in FIG. 8 or the embodiment shown in FIG. 11.

In a possible implementation, the topic circle server 350 may be the web page server 310 in the embodiment shown in FIG. 8 or the embodiment shown in FIG. 11. Alternatively, the topic circle server 350 may be the background server 320 in the embodiment shown in FIG. 8 or the embodiment shown in FIG. 11. Alternatively, the topic circle server 350 may be the web page server 310 and the background server 320 in the embodiment shown in FIG. 8 or the embodiment shown in FIG. 11.

In embodiments of this application, after requesting the cloud server 300 to release the sound effect configuration file, the electronic device 200 may send, to the cloud server 300, the sharing request for sharing the sound effect configuration file and topic content to a specified topic circle. After receiving the sharing request, the cloud server 300 may push the download link and topic description content of the sound effect configuration file to another user equipment that follows the specified topic circle. A user may view, on the another user equipment, the download link and the description content of the sound effect configuration file in the specified topic circle, and like, retweet, and comment on the download link and the description content of the sound effect configuration file. The cloud server 300 may determine the recommendation priority of the sound effect configuration file with reference to the evaluation information of the user on the sound effect configuration file. In this way, topicality of the sound effect function when the user listens to music and participation of the user in the sound effect function can be increased, so that the user can discover a hot sound effect in time.

In an application scenario, the sound effect database 330 of the cloud server 300 may further store a plurality of sound effect algorithm plug-ins. When setting the first sound effect parameter, the electronic device 200 may set a first sound effect algorithm plug-in used in matching with the first sound effect parameter. The electronic device 200 may send the first sound effect parameter and identification information of the first sound effect algorithm plug-in to the cloud server 300. The cloud server 300 may generate the first sound effect configuration file based on the first sound effect parameter, associate the first sound effect configuration file with the identification information of the first sound effect algorithm plug-in, and store the first sound effect configuration file and the identification information of the first sound effect algorithm plug-in in the sound effect database 330. When the electronic device 100 downloads the first sound effect configuration file from the cloud server 300, the cloud server 300 may send the first sound effect configuration file and the first sound effect algorithm plug-in to the electronic device 100. The electronic device 100 may input the first sound effect parameter in the first sound effect configuration file and original audio to the first sound effect algorithm plug-in to perform sound effect processing, to obtain target audio, and play the target audio. In this way, a sound effect algorithm of a playing client on the electronic device 100 may be updated, to implement more sound effect functions, for example, sound recording noise reduction, human voice and accompaniment separation, and spatial surround processing.

FIG. 11 is a schematic flowchart of an audio processing method according to another embodiment of this application.

The audio processing method may be applied to the audio processing system 10. The audio processing system 10 may include an electronic device 100, an electronic device 200, and a cloud server 300. In some embodiments, the cloud server 300 may include a web page server 310, a background server 320, a sound effect database 330, and a sound effect market server 340. This is not limited. In embodiments of this application, the cloud server 300 may further include more or fewer servers.

As shown in FIG. 11, the audio processing method may include the following steps.

S1101: The sound effect database 330 stores one or more sound effect algorithm plug-ins.

The one or more sound effect algorithm plug-ins include a first sound effect algorithm plug-in, and the first sound effect algorithm plug-in includes any one of the following: a recording noise reduction sound effect algorithm plug-in, a human voice and accompaniment separation sound effect algorithm plug-in, a spatial surround processing sound effect algorithm plug-in, and the like.

S1102: The electronic device 200 receives a first input for opening a sound effect production web page.

For detailed content, refer to step S801 in the embodiment shown in FIG. 8. Details are not described herein again.

S1103: The electronic device 200 may send a first web page request to the web page server 310 in response to the first input.

For detailed content, refer to step S802 in the embodiment shown in FIG. 8. Details are not described herein again.

S1104: The web page server 310 obtains sound effect algorithm identifiers of the one or more sound effect algorithm plug-ins from the sound effect database 330.

The web page server 310 may directly obtain the sound effect algorithm identifiers of the one or more sound effect algorithm plug-ins from the sound effect database 330. The sound effect algorithm identifiers of the one or more sound effect algorithm plug-ins may include a first sound effect algorithm identifier.

In a possible implementation, the background server 320 may obtain the sound effect algorithm identifiers of the one or more sound effect algorithm plug-ins from the sound effect database 330, and then forward the sound effect algorithm identifiers of the one or more sound effect algorithm plug-ins to the web page server 310.

The foregoing step S1104 may be performed after step S1103, or may be performed before step S1103. This is not limited in embodiments of this application.

S1105: The web page server 310 generates first web page data.

The web page server 310 may use the sound effect algorithm identifiers of one or more sound effect algorithm plug-ins as a setting option in a sound effect algorithm plug-in setting bar on the sound effect production web page, and generate the first web page data of the sound effect production web page.

S1106: After receiving the first web page request, the web page server 310 may send the first web page data to the electronic device 200.

For detailed content, refer to step S803 in the embodiment shown in FIG. 8. Details are not described herein again.

S1107: The electronic device 200 may display the sound effect production web page based on the first web page data.

For detailed content, refer to step S804 in the embodiment shown in FIG. 8. Details are not described herein again.

S1108: The electronic device 200 may receive a first sound effect parameter, a first sound effect description, and the first sound effect algorithm identifier that are entered by a user on the sound effect production web page.

For the sound effect production web page, refer to the part 650 of the sound effect production web page in FIG. 6F, the part 660 of the sound effect production web page in FIG. 6G, the part 670 of the sound effect production web page in FIG. 6H, and the part 680 of the sound effect production web page in FIG. 6I. For a text description of the sound effect production web page, refer to the embodiments shown in FIG. 6F to FIG. 6I. Details are not described herein again.

The user may select the first sound effect algorithm identifier corresponding to the first sound effect parameter from the sound effect algorithm plug-in setting bar 656 on the part 650 of the sound effect production web page in FIG. 6F. The first sound effect algorithm identifier is an identifier name of the first sound effect algorithm plug-in.

S1109: The electronic device 200 may send the first sound effect parameter, the first sound effect description, and the first sound effect algorithm identifier to the web page server 310.

S1110: The web page server 310 may forward the received first sound effect parameter, the first sound effect description, and the first sound effect algorithm identifier to the background server 320.

S1111: The web page server 310 may generate a first sound effect configuration file based on the first sound effect parameter.

For detailed content, refer to step S808 in the embodiment shown in FIG. 8. Details are not described herein again.

S1112: The electronic device 200 may receive the first sound effect description and a third input for confirming release of the first sound effect parameter that are entered by the user.

For detailed content, refer to step S816 in the embodiment shown in FIG. 8. Details are not described herein again.

S1113: The electronic device 200 may send a release request to the web page server 310 in response to the third input.

The release request includes identification information of the first sound effect parameter and the first sound effect description.

For detailed content, refer to step S817 in the embodiment shown in FIG. 8. Details are not described herein again.

S1114: The web page server 310 may forward the release request to the background server 320.

For detailed content, refer to step S818 in the embodiment shown in FIG. 8. Details are not described herein again.

S1115: The background server 320 may store the first sound effect configuration file, the first sound effect description, and the first sound effect algorithm identifier in the sound effect database 330.

S1116: The sound effect market server 340 may obtain the first sound effect description from the sound effect database 330.

For detailed content, refer to step S820 in the embodiment shown in FIG. 8. Details are not described herein again.

S1117: The sound effect market server 340 may generate first sound effect display information based on the first sound effect description.

For detailed content, refer to step S821 in the embodiment shown in FIG. 8. Details are not described herein again.

S1118: The sound effect market server 340 may send the first sound effect display information to the electronic device 100.

For detailed content, refer to step S822 in the embodiment shown in FIG. 8. Details are not described herein again.

S1119: The electronic device 100 may display the first sound effect display information.

For detailed content, refer to step S823 in the embodiment shown in FIG. 8. Details are not described herein again.

S1120: The electronic device 100 may receive a fourth input of the user for downloading the first sound effect configuration file.

For detailed content, refer to step S824 in the embodiment shown in FIG. 8. Details are not described herein again.

S1121: The electronic device 100 may send a download request to the sound effect market server 340 in response to the fourth input.

For detailed content, refer to step S825 in the embodiment shown in FIG. 8. Details are not described herein again.

S1122: The sound effect market server 340 may obtain the first sound effect configuration file and the first sound effect algorithm plug-in from the sound effect database 330 in response to the download request.

S1123: The sound effect market server 340 may send the first sound effect configuration file and the first sound effect algorithm plug-in to the electronic device 100.

S1124: The electronic device 100 may perform sound effect processing on original audio based on the first sound effect configuration file and the first sound effect algorithm plug-in, to obtain target audio.

A file type of the sound effect algorithm plug-in may be a ".Bin" type file, or may be a file of another type. This is not limited herein. The sound effect algorithm plug-in may include one or more pieces of sound effect algorithm execution code.

After downloading the first sound effect configuration file and the first sound effect algorithm plug-in from the sound effect market server 340, the electronic device 100 may obtain the first sound effect parameter from the first sound effect configuration file through parsing. The electronic device 100 may run the one or more pieces of sound effect algorithm execution code in the sound effect algorithm plug-in, and perform sound effect processing on the original audio based on the first sound effect parameter, to obtain the target audio.

S1125: The electronic device 100 may play the target audio.

In some embodiments, after step S1109 and before step S1110, the electronic device 200 may further receive a second input of the user for auditioning first music data based on the first sound effect parameter. In response to the second input, the electronic device 200 may send an audition request to the web page server 310. The web page server 310 may forward the audition request to the background server 320. The background server 320 may obtain, from the sound effect database 330, the first sound effect algorithm plug-in corresponding to the first sound effect configuration file, and perform sound effect processing on the first music data based on the first sound effect configuration file and the first sound effect algorithm plug-in, to obtain second music data. The background server 320 may send both the first music data and the second music data to the electronic device 200 through the web page server 310, and the electronic device 200 may compare and play the second music data and the first music data. In this way, after auditioning the second music data, the user may determine whether to modify the first sound effect parameter or confirm to release the first sound effect parameter to a sound effect market.

In some embodiments, a switch of the sound effect algorithm plug-in may be displayed on the sound effect production web page, and a sound effect algorithm identifier option of the sound effect algorithm plug-in is not displayed. When setting the first sound effect parameter on the sound effect production web page, the user may turn on the switch of the sound effect algorithm plug-in. After the electronic device 200 submits the first sound effect parameter to the background server 320 through the web page server 310, the background server 320 may obtain, by matching, from the sound effect database based on the first sound effect parameter, the first sound effect algorithm plug-in corresponding to the first sound effect parameter. The electronic device 100 subsequently obtains the first sound effect configuration file and the first sound effect algorithm plug-in from the sound effect market server 340, and performs sound effect processing on the original audio based on the first sound effect configuration file and the first sound effect algorithm plug-in.

When the user can set the first sound effect parameter on the sound effect production web page and turn off the switch of the sound effect algorithm plug-in, the method shown in FIG. 8 may be implemented.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. An audio processing method, applied to an audio processing system comprising a first electronic device and a second electronic device, wherein the method comprises:
obtaining, by the first electronic device, first web page data of a sound effect production web page from a cloud server;
displaying, by the first electronic device, the sound effect production web page based on the first web page data;
receiving, by the first electronic device, a first sound effect parameter entered by a user on the sound effect production web page;
sending, by the first electronic device, the first sound effect parameter to the cloud server;
sending, by the second electronic device to the cloud server, a download request for a first sound effect configuration file corresponding to the first sound effect parameter;
receiving, by the second electronic device, the first sound effect configuration file sent by the cloud server;
performing, by the second electronic device, sound effect processing on original audio based on the first sound effect configuration file, to obtain target audio; and
playing, by the second electronic device, the target audio.

2. The method according to claim 1, wherein the obtaining, by the first electronic device, first web page data of a sound effect production web page from a cloud server specifically comprises:
receiving, by the first electronic device, a first input of the user for opening the sound effect production web page;
sending, by the first electronic device in response to the first input, a first web page request to the cloud server; and
receiving, by the first electronic device, the first web page data sent by the cloud server.

3. The method according to claim 1 or 2, wherein before the sending, by the second electronic device to the cloud server, a download request for a first sound effect configuration file, the method further comprises:
receiving, by the second electronic device, a fourth input of the user for downloading the first sound effect configuration file; and
the sending, by the second electronic device to the cloud server, a download request for a first sound effect configuration file specifically comprises:
sending, by the second electronic device in response to the fourth input, the download request for the first sound effect configuration file to the cloud server.

4. The method according to any one of claims 1 to 3, wherein the receiving, by the second electronic device, the first sound effect configuration file sent by the cloud server specifically comprises:
receiving, by the second electronic device, the first sound effect configuration file and a first sound effect algorithm plug-in that are sent by the cloud server; and
the performing, by the second electronic device, sound effect processing on original audio based on the first sound effect configuration file, to obtain target audio specifically comprises:
performing, by the second electronic device, sound effect processing on the original audio based on the first sound effect configuration file and the first sound effect algorithm plug-in, to obtain the target audio.

5. The method according to any one of claims 1 to 4, wherein the audio processing system further comprises the cloud server, and before the sending, by the second electronic device to the cloud server, a download request for a first sound effect configuration file corresponding to the first sound effect parameter, the method further comprises:
receiving, by the first electronic device, a first sound effect description and a third input for confirming release of the first sound effect parameter that are entered by the user;
sending, by the first electronic device in response to the third input, a release request to the cloud server, wherein the release request comprises an identifier of the first sound effect parameter and the first sound effect description;
generating, by the cloud server in response to the release request, first sound effect display information based on the first sound effect description;
sending, by the cloud server, the first sound effect display information to the second electronic device; and
displaying, by the second electronic device, the first sound effect display information.

6. The method according to any one of claims 1 to 5, wherein before the receiving, by the first electronic device, a first sound effect description and a third input for confirming release of the first sound effect parameter that are entered by the user, the method further comprises:
receiving, by the first electronic device, a second input of the user for auditioning first music data based on the first sound effect parameter;
sending, by the first electronic device in response to the second input, an audition request to the cloud server;
performing, by the cloud server in response to the audition request, sound effect processing on the first music data based on the first sound effect configuration file, to obtain second music data;
sending, by the cloud server, the first music data and/or the second music data to the first electronic device; and
playing, by the first electronic device, the received first music data and/or the received second music data.

7. The method according to any one of claims 1 to 6, wherein the audio processing system further comprises the cloud server, and the method further comprises:
when the first electronic device receives the first sound effect parameter entered by the user on the sound effect production web page, receiving, by the first electronic device, a first sound effect algorithm identifier entered by the user on the sound effect production web page, wherein the first sound effect algorithm identifier is an identifier of the first sound effect algorithm plug-in corresponding to the first sound effect parameter, and the first sound effect parameter comprises the identifier of the first sound effect algorithm plug-in; and
after the cloud server receives the download request for the first sound effect configuration file, obtaining, by the cloud server based on the first sound effect algorithm identifier, the first sound effect algorithm plug-in from one or more sound effect algorithm plug-ins stored in a sound effect database.

8. The method according to any one of claims 1 to 7, wherein the audio processing system further comprises the cloud server, and the method further comprises:
obtaining, by the cloud server based on the first sound effect parameter, the first sound effect algorithm plug-in corresponding to the first sound effect parameter from the one or more sound effect algorithm plug-ins stored in the sound effect database.

9. The method according to any one of claims 1 to 8, wherein the audio processing system further comprises the cloud server, and after the cloud server generates the first sound effect configuration file based on the first sound effect parameter, the method further comprises:
receiving, by the first electronic device, a fifth input of the user for sharing the first sound effect configuration file to a sound effect topic circle;
sending, by the first electronic device in response to the fifth input, a sharing request to the cloud server, wherein the sharing request comprises a first topic name and first description content that are entered by the user;
generating, by the cloud server, a first topic tweet based on the first topic name, the first description content, and a download link of the first sound effect configuration;
receiving, by the second electronic device, a sixth input of the user for the first topic name;
sending, by the second electronic device in response to the sixth input, a first topic request to the cloud server;
sending, by the cloud server to the second electronic device in response to the first topic request, one or more topic tweets associated with the first topic, wherein the one or more topic tweets associated with the first topic comprise the first topic tweet; and
displaying, by the second electronic device, the first topic tweet.

10. The method according to any one of claims 1 to 9, wherein the method further comprises:
receiving, by the second electronic device, evaluation information of the user for the first topic tweet;
sending, by the second electronic device, the evaluation information of the first topic tweet to the cloud server;
collecting statistics on, by the cloud server, an evaluation degree of the first sound effect configuration file based on evaluation information that is of the first topic tweet and that is sent by a plurality of devices, wherein the plurality of devices comprise the second electronic device;
determining, by the cloud server, a recommendation degree of the first sound effect configuration file based on the evaluation degree of the first sound effect configuration file; and
pushing, by the cloud server, the first sound effect configuration file to a playing client device based on the recommendation degree of the first sound effect configuration file.

11. An electronic device, which is a first electronic device, comprising one or more processors and one or more memories, wherein the one or more memories are coupled to the one or more processors, the one or more memories are configured to store computer program code, the computer program code comprises computer instructions, and when the one or more processors execute the computer instructions, the first electronic device is enabled to perform the method performed by the first electronic device according to claims 1 to 10.

12. An electronic device, which is a second electronic device, comprising one or more processors and one or more memories, wherein the one or more memories are coupled to the one or more processors, the one or more memories are configured to store computer program code, the computer program code comprises computer instructions, and when the one or more processors execute the computer instructions, the second electronic device is enabled to perform the method performed by the second electronic device according to claims 1 to 10.

13. A computer storage medium, comprising computer instructions, wherein when the computer instructions are run on a first electronic device, the first electronic device is enabled to perform the method performed by the first electronic device according to claims 1 to 10.

14. A computer storage medium, comprising computer instructions, wherein when the computer instructions are run on a second electronic device, the second electronic device is enabled to perform the method performed by the second electronic device according to claims 1 to 10.
